# EUROPEAN PATENT APPLICATION

(11) **EP 4 132 081 A1**
(43) Date of publication of application: **08.02.2023**
(21) Application number: 21792771.4
(22) Date of filing: 22.04.2021
(51) Int. Cl.: H04W 24/10

(54) **COMMUNICATION METHOD AND APPARATUS FOR TRANSMISSION OF QUALITY OF EXPERIENCE MEASUREMENT RESULT**

(30) Priority: 23.04.2020 CN 202010327139
(71) Applicant: Huawei Technologies Co., Ltd., Shenzhen, Guangdong 518129 (CN)
(72) Inventor: HU, Xingxing, Shenzhen, Guangdong 518129 (CN); ZHANG, Hongping, Shenzhen, Guangdong 518129 (CN)
(74) Representative: Pfenning, Meinig & Partner mbB
(86) International application number: PCT/CN2021/089095
(87) International publication number: WO 2021/213481

(57) **Abstract**

This application discloses a communication method and apparatus for sending a quality of experience measurement result. The method includes: A terminal device obtains a corresponding quality of experience QoE measurement result based on a QoE measurement configuration, where the QoE measurement result includes a QoE measurement result corresponding to a secondary access network device, and sends the QoE measurement result by using a first radio bearer, where the first radio bearer is a radio bearer configured by a master access network device or the secondary access network device for the terminal device. Embodiments of this application disclose that the QoE measurement result corresponding to the secondary access network device is sent by using the first radio bearer, and the first radio bearer may be configured by the master access network device or the secondary access network device. This effectively resolves a problem of sending the QoE measurement result corresponding to the secondary access network device.

## Description

This application claims priority to Chinese Patent Application No. 202010327139.2, filed with the China National Intellectual Property Administration on April 23, 2020 and entitled "COMMUNICATION METHOD AND APPARATUS FOR SENDING QUALITY OF EXPERIENCE MEASUREMENT RESULT", which is incorporated herein by reference in its entirety.

### TECHNICAL FIELD

This application relates to the field of communication technologies, and in particular, to a communication method and apparatus for sending a quality of experience measurement result.

### BACKGROUND

In a wireless network, one terminal device may communicate with a plurality of base stations, which means that the terminal device is in dual connectivity (Dual-connectivity, DC) or multi-connectivity (Multi-connectivity, MC). In new protocols, dual connectivity is also referred to as multi-radio dual connectivity (Multi-radio Dual Connectivity, MR-DC). A network side may provide communication services for the terminal device using resources of the plurality of base stations, to provide high-rate transmission for the terminal device. In DC, a base station exchanging control plane signaling with a core network is referred to as a master node (Master Node, MN), and the other base stations are referred to as secondary nodes (Secondary Node, SN). Data radio bearers (Data Radio Bearer, DRB) in DC are classified into the following types: master cell group bearers (Master Cell group Bearer, MCG Bearer), secondary cell group bearers (Secondary Cell group bearer, SCG Bearer), and split bearers (Split Bearer). The MCG bearer indicates that a radio link control (Radio Link Control, RLC) or medium access control (Medium Access Control, MAC) entity of the DRB is only on a master base station. The SCG bearer indicates that an RLC/MAC entity of the DRB is only on a secondary base station. The split bearer indicates that an RLC/MAC entity of the DRB exists on both a master base station and a secondary base station (that is, the RLC/MAC entity exists on both the master base station and the secondary base station for the DRB). A bearer whose packet data convergence protocol (Packet Data Convergence Protocol, PDCP) terminates on the MN is referred to as an MN terminated bearer. To be specific, downlink (Downlink, DL) data directly arrives at the MN from the core network, is processed by a service data adaptation protocol (Service Data Adaptation Protocol, SDAP)/PDCP of the MN, and then is sent to the terminal device through the RLC/MAC (Note: Currently, the SDAP layer exists only when the terminal device is connected to a 5G core network with a quality of service flow architecture). Uplink (Uplink, UL) data is processed by the SDAP/PDCP of the MN and then sent to the core network. Similarly, a bearer whose PDCP terminates on the SN is referred to as an SN terminated bearer. To be specific, the DL data directly arrives at the SN from the core network, is processed by an SDAP/a PDCP of the SN, and then sent to the terminal device through the RLC/MAC. The UL data is processed by the SDAP/PDCP of the SN and then sent to the core network. In addition, in dual connectivity, both the MN and the SN have a radio resource control (Radio Resource Control, RRC) entity, and both can generate an RRC message. In addition, the SN may directly send, to the terminal device, an RRC message generated by the secondary base station; or may notify the MN of an RRC message generated by the SN, and then the MN sends the RRC message to the terminal device.

A basic idea of a minimization of drive tests (Minimization of Drive-Tests, MDT) technology is that operators replace some conventional drive test work with measurement sending that is performed by commercial terminals of subscribed users, to automatically collect measurement data of the terminals, to detect problems and faults in the wireless network for optimization. For some services, such as streaming media services (streaming media service) and multimedia telephony services for IP multimedia system (Multimedia Telephony Service for IMS, MTSI), operators wants to know user experience, to better optimize networks and improve user experience. Therefore, quality of experience (Quality of Experience, QoE) measurement collection, also be referred to as application layer measurement collection, is provided. In current technologies, there is a lack of related research on how the network side configures QoE measurement for the terminal device and how the terminal device sends a QoE measurement result in an MR-DC scenario.

### SUMMARY

Embodiments of this application provide a communication method and apparatus for sending a quality of experience measurement result, to resolve a problem that a terminal device sends a quality of experience measurement result in a dual connectivity scenario.

According to a first aspect, a communication method is provided. The method may be implemented by a terminal device, or may be implemented by a component (for example, a chip or a circuit) that can be configured in the terminal device. The method may include:
obtaining a corresponding quality of experience QoE measurement result based on a QoE measurement configuration, where the QoE measurement result includes a QoE measurement result corresponding to a secondary access network device; and
sending the QoE measurement result by using a first radio bearer, where the first radio bearer is a radio bearer configured by a master access network device or the secondary access network device for the terminal device.

In this embodiment of this application, the master access network device configures the first radio bearer for the terminal device, or configures a first logical channel in the radio bearer for the terminal to send the QoE measurement result. In this way, in a dual-connectivity or multi-connectivity scenario, the terminal can send the QoE measurement result by using the radio bearer or the logical channel configured by the master access network device, to enhance real-time performance of information exchange of a QoE measurement process performed by the master access network device on the secondary access network device in the dual-connectivity or multi-connectivity scenario. Alternatively, the secondary access network device may configure a first logical channel in the radio bearer for sending the QoE measurement result by the terminal, to improve independence of a QoE measurement process of the secondary access network device.

In a possible design, that the first radio bearer is a radio bearer configured by the master access network device for the terminal device includes:

The first radio bearer is the radio bearer configured by the master access network device for the terminal device to send the QoE measurement result.

In this embodiment of this application, the master access network device configures the radio bearer for the terminal device to send the QoE measurement result, so that possible impact on other signaling or data transmission in a process of sending the QoE measurement result can be reduced. In addition, the master access network device may set different logical channel priorities for different radio bearers, so that the terminal device may transmit signaling or data on the different radio bearers based on the priorities set for the different radio bearers when obtaining an uplink transmission grant.

In a possible design, the first radio bearer includes a plurality of logical channels.

That sending the QoE measurement result by using a first radio bearer includes:

The QoE measurement result is sent through the first logical channel in the plurality of logical channels of the first radio bearer.

In this embodiment of this application, the first logical channel may be a channel obtained through division in a radio bearer that has been configured by the master access network device or the secondary access network device for the terminal device to send a QoE measurement result corresponding to the secondary access network device, or may be a channel obtained through division in a radio bearer newly configured by the master access network device for the terminal device to send a QoE measurement result corresponding to the secondary access network device. In this way, possible impact on other signaling or data in a process of sending the QoE measurement result can be reduced, and management efficiency of the plurality of logical channels can be improved and radio bearer resources can be fully utilized by multiplexing the radio bearer through division of logical channels.

In a possible design, the QoE measurement result corresponding to a secondary access network device includes: a measurement result corresponding to a QoE measurement configuration configured by the secondary access network device for the terminal device; or a measurement result corresponding to a QoE measurement configuration configured by the master access network device that is triggered by the secondary access network device.

In a possible design, the method further includes:
receiving, from the master access network device, the QoE measurement configuration configured by the secondary access network device for the terminal device; or
receiving, from the secondary access network device, the QoE measurement configuration configured by the secondary access network device for the terminal device.

In a possible design, before the sending the QoE measurement result by using a first radio bearer, the method further includes:
when the first radio bearer is the radio bearer configured by the master access network device for the terminal device, receiving indication information from the master access network device; or when the first radio bearer is the radio bearer configured by the secondary access network device for the terminal device, receiving indication information from the secondary access network device.

The indication information indicates the first radio bearer or the first logical channel of the first radio bearer for sending the QoE measurement result.

In this embodiment of this application, the master access network device sends the indication information to the terminal device, or the secondary access network device sends the indication information to the terminal device, to indicate the first radio bearer or the first logical channel of the first radio bearer for sending the QoE measurement result. This can avoid a possible channel confusion problem caused when a same master access network device or secondary access network device configures a plurality of radio bearers for a terminal device to send QoE measurement results corresponding to different objects, for example, different network sides, or different service types. The indication information is sent to the terminal device, so that the terminal device knows a radio bearer or a logical channel on which the QoE measurement result should be sent.

In a possible design, the QoE measurement result corresponding to the secondary access network device is a measurement result corresponding to a target service type, and the target service type is determined by the master access network device.

In this embodiment of this application, the master access network device determines a target service type of QoE measurement that can be performed by the secondary access network device, so that the master access network device and the secondary access network device can negotiate to perform QoE measurement configuration. This avoids repeated configuration on a same type service, improves configuration efficiency, and prevents the QoE measurement configuration configured by the master access network device or the secondary access network device from overwriting the QoE measurement configuration configured by the secondary access network device or the master access network device.

According to a second aspect, a communication method is provided. The method may be implemented by an access network device, or may be implemented by a component (for example, a chip or a circuit) that can be configured in the access network device. The method may include:

The access network device configures a first radio bearer for receiving a quality of experience QoE measurement result, where the access network device includes a master access network device or a secondary access network device, and the QoE measurement result includes a QoE measurement result corresponding to the secondary access network device; and
the access network device receives the QoE measurement result from a terminal device by using the first radio bearer.

In a possible design, the first radio bearer includes a plurality of logical channels.

The receiving the QoE measurement result sent by a terminal device by using the first radio bearer includes:
receiving, through a first logical channel of the plurality of logical channels of the first radio bearer, the QoE measurement result sent by the terminal device.

In a possible design, the QoE measurement result corresponding to the secondary access network device includes a measurement result corresponding to a QoE measurement configuration configured by the secondary access network device for the terminal device; or a measurement result corresponding to a QoE measurement configuration configured by the master access network device that is triggered by the secondary access network device.

In a possible design, the master access network device configures the first radio bearer for receiving the QoE measurement result, and the method further includes:

The master access network device receives, from the secondary access network device, the QoE measurement configuration configured by the secondary access network device for the terminal device; and
the master access network device sends, to the terminal device, the QoE measurement configuration configured by the secondary access network device for the terminal device.

In a possible design, the secondary access network device configures the first radio bearer for receiving the QoE measurement result, and the method further includes:

The secondary access network device sends, to the terminal device, the QoE measurement configuration configured by the secondary access network device for the terminal device; or the secondary access network device sends, to the master access network device, the QoE measurement configuration configured by the secondary access network device for the UE.

In a possible design, before the access network device receives the QoE measurement result by using the first radio bearer, the method further includes:

The access network device sends indication information to the terminal device, where the indication information indicates the first radio bearer or the first logical channel of the first radio bearer for sending the QoE measurement result.

In a possible design, the QoE measurement result corresponding to the secondary access network device is a measurement result corresponding to a target service type, and the target service type is determined by the master access network device.

According to a third aspect, a method for determining a target service type is provided. The method may be implemented by an access network device, or may be implemented by a component (for example, a chip or a circuit) that can be configured in the access network device. The access network device may be a master access network device or a secondary access network device.

When the access network device is the master access network device, the method includes:
generating third information, where the third information indicates a target service type of QoE measurement that can be configured or triggered corresponding to the secondary access network device; and
sending the third information to the secondary access network device.

When the access network device is the secondary access network device, the method includes:
obtaining the third information from the master access network device.

In this embodiment of this application, the master access network device and the secondary access network device negotiate the target service type of QoE measurement that can be configured or triggered corresponding to the secondary access network device, so that a probability that two access network devices repeatedly perform QoE measurement configuration on a same type service can be reduced. In addition, efficiency of obtaining a QoE measurement result of the target service type by the secondary access network device can be further improved.

According to a fourth aspect, a communication apparatus is provided. The communication apparatus may be a terminal device, or may be a component configured in the terminal device. The apparatus may include:
a processing module, configured to obtain a corresponding quality of experience QoE measurement result based on a QoE measurement configuration, where the QoE measurement result includes a QoE measurement result corresponding to a secondary access network device; and
a sending module, configured to send the QoE measurement result by using a first radio bearer, where the first radio bearer is a radio bearer configured by a master access network device or the secondary access network device for the terminal device.

In a possible design, the terminal device further includes a receiving module, configured to:
receive, from the master access network device, a QoE measurement configuration configured by the secondary access network device for the terminal device; or
receive, from the secondary access network device, a QoE measurement configuration configured by the secondary access network device for the terminal device.

In a possible design, the receiving module is further configured to:
when the first radio bearer is the radio bearer configured by the master access network device for the terminal device, receive indication information from the master access network device; or when the first radio bearer is the radio bearer configured by the secondary access network device for the terminal device, receive indication information from the secondary access network device, where
the indication information indicates the first radio bearer or a first logical channel of the first radio bearer for sending the QoE measurement result.

According to a fifth aspect, a communication apparatus is provided. The communication apparatus may be a master access network device, or may be a component configured in the master access network device. The apparatus may include:
a processing module, adapted to configure a first radio bearer for receiving a quality of experience QoE measurement result, where the QoE measurement result includes a QoE measurement result corresponding to a secondary access network device; and
a receiving module, configured to receive, by using the first radio bearer, the QoE measurement result sent by a terminal device.

In a possible design, the first radio bearer includes a plurality of logical channels.

The receiving module is specifically configured to receive, through a first logical channel of the plurality of logical channels of the first radio bearer, the QoE measurement result sent by the terminal device.

In a possible design, the receiving module is further configured to receive, from the secondary access network device, a QoE measurement configuration configured by the secondary access network device for the terminal device.

The master access network device further includes a sending module, configured to:
send, to the terminal device, the QoE measurement configuration configured by the secondary access network device for the terminal device.

The sending module is further configured to send indication information to the terminal device, where the indication information indicates the first radio bearer or the first logical channel of the first radio bearer for sending the QoE measurement result.

According to a sixth aspect, a communication apparatus is provided. The communication apparatus may be a secondary access network device, or may be a component that can be configured in the secondary access network device. The apparatus may include:
a processing module, adapted to configure a first radio bearer for receiving a quality of experience QoE measurement result, where the QoE measurement result includes a QoE measurement result corresponding to the secondary access network device; and
a receiving module, configured to receive, by using the first radio bearer, the QoE measurement result sent by a terminal device.

Optionally, the first radio bearer includes a plurality of logical channels; and the receiving module is specifically configured to receive, through a first logical channel of the plurality of logical channels of the first radio bearer, the QoE measurement result sent by the UE.

In a possible design, the secondary access network device further includes a sending module, configured to:
send, to the terminal device, a QoE measurement configuration configured by the secondary access network device for the terminal device; or
send, to the master access network device, a QoE measurement configuration configured by the secondary access network device for the terminal device.

Optionally, the sending module is further configured to send indication information to the terminal device, where the indication information indicates the first radio bearer or the first logical channel of the first radio bearer for sending the QoE measurement result.

According to a seventh aspect, a communication apparatus is provided. The communication apparatus may be an access network device, or may be a component that can be configured in the access network device. The access network device may be a master access network device or a secondary access network device.

When the access network device is the master access network device, the apparatus may include:
a processing module, configured to generate third information, where the third information indicates a target service type of QoE measurement that can be configured or triggered corresponding to the secondary access network device; and
a sending module, configured to send the third information to the secondary access network device.

When the access network device is the secondary access network device, the apparatus may include:
a receiving module, configured to obtain the third information from the master access network device.

According to an eighth aspect, a communication apparatus is provided. The apparatus includes at least one processor, and the at least one processor is coupled to at least one memory.

The at least one processor is configured to execute a computer program or instructions stored in the at least one memory, to enable the apparatus to perform the method in any one of the first aspect or the implementations of the first aspect, or the method corresponding to the master access network device in any one of the second aspect or the implementations of the second aspect, or the method corresponding to the secondary access network device in any one of the second aspect or the implementations of the second aspect, or the method in the third aspect.

The apparatus may be a terminal, or may be a chip included in the terminal. The functions of the communication device may be implemented by hardware, or may be implemented by hardware by executing corresponding software. The hardware or the software includes one or more modules corresponding to the functions.

The apparatus may be an access network device, or may be a chip included in the access network device. The functions of the communication device may be implemented by hardware, or may be implemented by hardware by executing corresponding software. The hardware or the software includes one or more modules corresponding to the functions.

In a possible design, a structure of the apparatus includes a processing module and a transceiver module. The processing module is configured to support the apparatus in performing the method in any one of the first aspect or the possible implementations of the first aspect, or performing the method corresponding to the master access network device in any one of the second aspect or the possible implementations of the second aspect, or performing the method corresponding to the secondary access network device in any one of the second aspect or the possible implementations of the second aspect, or performing the method in the third aspect.

In another possible design, the structure of the apparatus includes a processor, and may further include a memory. The processor is coupled to the memory, and may be configured to execute computer program instructions stored in the memory, to enable the apparatus to perform the method in any one of the first aspect or the possible implementations of the first aspect, or perform the method corresponding to the master access network device in any one of the second aspect or the possible implementations of the second aspect, or perform the method corresponding to the secondary access network device in any one of the second aspect or the possible implementations of the second aspect, or perform the method in the third aspect. Optionally, the apparatus further includes a communication interface, and the processor is coupled to the communication interface. When the apparatus is the access network device, the communication interface may be a transceiver or an input/output interface. When the apparatus is the chip included in the access network device, the communication interface may be an input/output interface of the chip. Optionally, the transceiver may be a transceiver circuit, and the input/output interface may be an input/output circuit.

According to a ninth aspect, an embodiment of this application provides a chip system, including a processor. The processor is coupled to a memory, and the memory is configured to store a program or instructions. When the program or the instructions are executed by the processor, the chip system is enabled to implement the method in any one of the first aspect or the possible implementations of the first aspect, or perform the method corresponding to the master access network device in any one of the second aspect or the possible implementations of the second aspect, or perform the method corresponding to the secondary access network device in any one of the second aspect or the possible implementations of the second aspect, or perform the method in the third aspect.

Optionally, the chip system further includes an interface circuit, and the interface circuit is configured to exchange code instructions with the processor.

Optionally, there may be one or more processors in the chip system, and the processor may be implemented by hardware or may be implemented by software. When being implemented by the hardware, the processor may be a logic circuit, an integrated circuit, or the like. When being implemented by the software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated on a same chip, or may be respectively disposed on different chips. A type of the memory and a manner of disposing the memory and the processor are not specifically limited in this application.

According to a tenth aspect, an embodiment of this application provides a computer-readable storage medium. The computer-readable storage medium stores a computer program or instructions. When the computer program or the instructions are executed, a computer is enabled to perform the method in any one of the first aspect or the possible implementations of the first aspect, or perform the method corresponding to the master access network device in any one of the second aspect or the possible implementations of the second aspect, or perform the method corresponding to the secondary access network device in any one of the second aspect or the possible implementations of the second aspect, or perform the method in the third aspect.

According to an eleventh aspect, an embodiment of this application provides a computer program product. When a computer reads and executes the computer program product, the computer is enabled to perform the method in any one of the first aspect or the possible implementations of the first aspect, or perform the method corresponding to the master access network device in any one of the second aspect or the possible implementations of the second aspect, or perform the method corresponding to the secondary access network device in any one of the second aspect or the possible implementations of the second aspect, or perform the method in the third aspect.

According to a twelfth aspect, an embodiment of this application provides a communication system. The communication system includes a terminal device and an access network device. The terminal device includes the communication apparatus according to the third aspect, and the access network device includes the communication apparatus according to the fourth aspect; or the access network device includes the communication apparatus according to the fifth aspect; or the access network device includes the communication apparatus according to the seventh aspect.

### BRIEF DESCRIPTION OF DRAWINGS

To describe technical solutions in embodiments of this application or the conventional technology more clearly, the following briefly describes the accompanying drawings used in description of embodiments.
FIG. 1A is a schematic diagram of a network architecture according to an embodiment of this application;
FIG. 1B is a schematic diagram of a communication system according to an embodiment of this application;
FIG. 1C is a schematic diagram of DC connectivity according to an embodiment of this application;
FIG. 1D is a schematic diagram of an MDT measurement process according to an embodiment of this application;
FIG. 2A is a flowchart of a communication method according to an embodiment of this application;
FIG. 2B is a schematic diagram of a specified radio bearer process according to an embodiment of this application;
FIG. 3 is a flowchart of another communication method according to an embodiment of this application;
FIG. 4 is a schematic flowchart of a method for determining a target service type according to an embodiment of this application;
FIG. 5 is a schematic diagram of a communication apparatus according to an embodiment of this application;
FIG. 6 is a schematic diagram of a communication apparatus according to an embodiment of this application;
FIG. 7A is a schematic diagram of a communication apparatus according to an embodiment of this application;
FIG. 7B is a schematic diagram of a communication apparatus according to an embodiment of this application; and
FIG. 8 is a schematic diagram of a structure of a communication apparatus according to an embodiment of this application.

### DESCRIPTION OF EMBODIMENTS

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or modules is not limited to the listed steps or modules, but optionally further includes an unlisted step or module, or optionally further includes another inherent step or module of the process, the method, the product, or the device.

"Embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

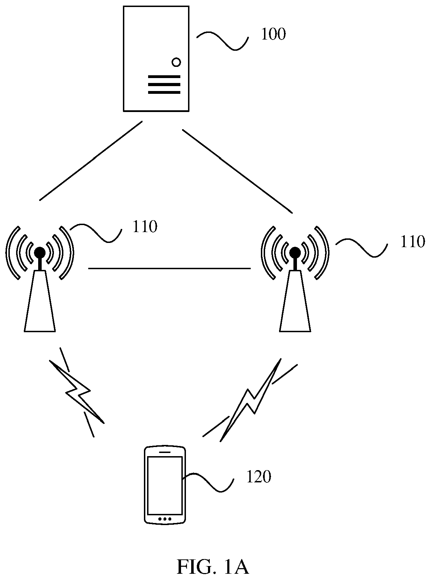

The following describes terms in embodiments of this application by using FIG. 1A as an example.

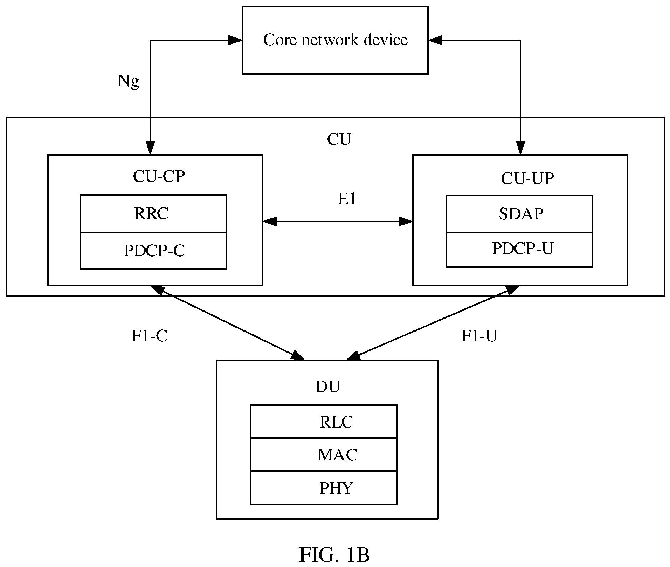

FIG. 1A is a schematic diagram of a network architecture according to an embodiment of this application. In the architecture, network elements mainly include a terminal device, a core network, and an access network device.
(1) A terminal device 120 is also referred to as user equipment (user equipment, UE), a mobile station (mobile station, MS), a mobile terminal (mobile terminal, MT), or the like, and is a device that provides voice and/or data connectivity for users. For example, the terminal device 120 is a handheld device or a vehicle-mounted device that has a wireless connection function. Currently, some examples of the terminal are a mobile phone (mobile phone), a tablet computer, a notebook computer, a palmtop computer, a mobile internet device (Mobile Internet Device, MID), a wearable device, a virtual reality (virtual reality, VR) device, an augmented reality (Augmented Reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.
(2) An access network device 110 is a radio access network (Radio Access Network, RAN) node (or device) that connects a terminal to a wireless network, and may also be referred to as a base station. Currently, some examples of the RAN node are an evolved NodeB (gNB), a transmission reception point (Transmission Reception Point, TRP), an evolved NodeB (Evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, Home Evolved NodeB or Home NodeB, HNB), a baseband unit (Baseband Unit, BBU), a wireless fidelity (Wireless Fidelity, Wi-Fi) access point (Access Point, AP), or the like. In addition, in a network structure, the access network device may include a centralized unit (Centralized Unit, CU) node, or a distributed unit (Distributed Unit, DU) node, or a RAN device including a CU node and a DU node. The RAN device including the CU node and the DU node splits protocol layers of the RAN device. Some functions of the protocol layers are centrally controlled by a CU, and remaining functions or all functions of the protocol layers are distributed in DUs, and the CU centrally controls the DUs. The access network device is divided into the CU and the DU from the perspective of logical functions. The CU and the DU may be physically separated or deployed together. Division into the CU and the DU may be performed based on protocol layers of a wireless network. For example, in a possible division manner, the CU is configured to perform functions of a radio resource control RRC layer, a service data adaptation protocol SDAP layer, and a packet data convergence protocol PDCP layer, and the DU is configured to perform functions of a radio link control RLC layer, a media access control MAC layer, a physical layer, and the like. It may be understood that the foregoing division is merely an example, and division into the CU and the DU may alternatively be performed in another manner. For example, the CU or the DU may have functions of more protocol layers through division. For example, the CU or the DU may alternatively have some processing functions of the protocol layers through division. In a possible implementation, some functions of the RLC layer and functions of protocol layers above the RLC layer are set on the CU, and remaining functions of the RLC layer and functions of protocol layers below the RLC layer are set on the DU. In another possible implementation, functions of the CU or the DU may alternatively be classified based on service types or other system requirements. For example, division is performed based on delays, a function whose processing time needs to satisfy a delay requirement is set on the DU, and a function whose processing time does not need to satisfy the delay requirement is set on the CU. In still another possible implementation, the CU may alternatively have one or more functions of the core network. One or more CUs may be centrally or separately disposed. For example, the CUs may be disposed on a network side for ease of centralized management. The DU may have a plurality of radio frequency functions, or the radio frequency functions may be disposed remotely. It should be understood that functions of the CU and the DU may be set as required during specific implementation. This is not limited in embodiments of this application. Functions of the CU may be implemented by one entity, or may be implemented by different entities. In a manner, functions of the CU may be further divided into a control plane (Control Plane, CP) function and a user plane (User Plane, UP) function. In other words, the CU may be divided into a CU-UP and a CU-CP. The CU-CP and the CU-UP may be implemented by the different function entities, or may be implemented by a same function entity. The CU-CP and the CU-UP may be coupled to the DU, to jointly complete functions of the access network device. In a possible manner, the CU-CP is responsible for control plane functions, and mainly includes RRC and PDCP-C. The PDCP-C is mainly responsible for encryption, decryption, integrity protection, data transmission, and the like of control plane data. The CU-UP is responsible for user plane functions, and mainly includes SDAP and PDCP-U. The SDAP is mainly responsible for processing data of a core network device and mapping data flows (flow) to bearers. The PDCP-U is mainly responsible for encryption, decryption, integrity protection, header compression, serial number maintenance, data transmission, and the like on a data plane. Another possible implementation is that PDCP-C is also in the CU-UP. FIG. 1B is a schematic diagram of a communication system according to an embodiment of this application. The communication system may be applied to the communication method provided in embodiments of this application. As shown in FIG. 1B, the system includes a core network device, a CU, and a DU, and the CU may be divided into a CU-UP and a CU-CP. The core network device may communicate with the CU (for example, the CU-UP and/or the CU-CP). For example, the CU-CP may represent an access network device to be connected to the core network device through an Ng interface. The CU-UP may communicate with the CU-CP, for example, through an E1 interface. The CU-UP and the CU-CP may communicate with the DU. For example, the CU-CP may be connected to the DU through Fl-C (a control plane), and the CU-UP is connected to the DU through Fl-U (a user plane). A plurality of DUs may share one CU, or one DU may be connected to a plurality of CUs (not shown in the figure). The CU and the DU may be connected through an interface, for example, an Fl interface.
(3) A core network device 100 is a device on a core network (Core Network, CN) that provides service support for a terminal. Currently, some examples of the core network device are: an access and mobility management function (Access and Mobility Management Function, AMF) entity, a session management function (Session Management Function, SMF) entity, a user plane function (User Plane Function, UPF) entity, and the like, which are not listed one by one herein. The AMF entity may be responsible for access management and mobility management of the terminal. The SMF entity may be responsible for session management, for example, user session establishment. The UPF entity may be a user-plane function entity, and is mainly responsible for a connection to an external network. It should be noted that an entity in this application may also be referred to as a network element or a function entity. For example, the AMF entity may also be referred to as an AMF network element or an AMF function entity. For another example, the SMF entity may also be referred to as an SMF network element or an SMF function entity.

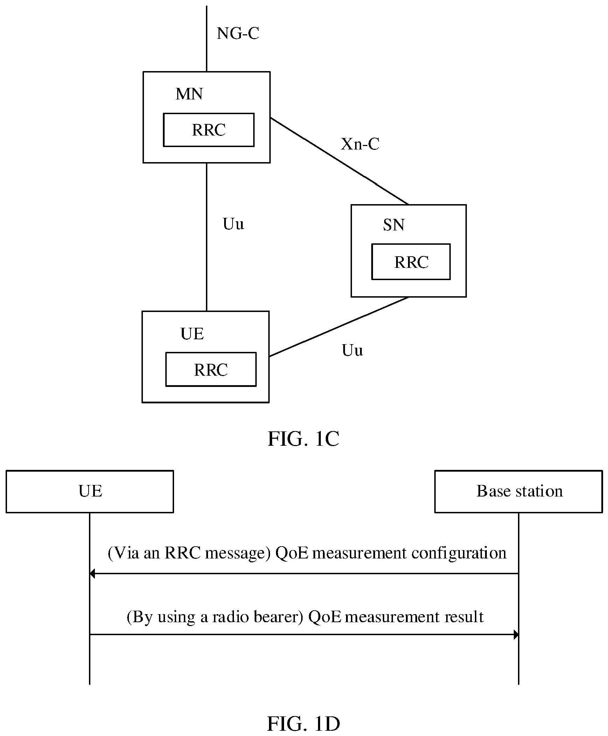

When a terminal device (UE is used for description in embodiments of this application) communicates with a plurality of RANs, that is, the terminal device is in dual connectivity or multi-radio dual connectivity, there is control plane signaling interaction between a master access network device and a core network. In embodiments of this application, the master access network device is described using a master node MN, and another secondary access network device is described using a secondary node SN. FIG. 1C is a schematic diagram of DC connectivity according to an embodiment of this application. As shown in FIG. 1C, an MN is connected to an SN through a control plane interface Xn-C, both the MN and the SN are connected to the UE through a Uu interface, and the MN is connected to a core network through an NG-C control plane interface. Both the MN and the SN have an RRC entity, and both can generate an RRC message. An RRC status of the UE mainly lies in the MN. In downlink, the SN may directly send an RRC message generated by the SN to the UE. Alternatively, the SN may notify the MN of an RRC message generated by the SN, and then the MN sends the RRC message to the UE (the MN encapsulates the RRC message generated by the SN in an RRC message sent to the UE by the MN). In uplink, the UE may directly send, to the UE, an RRC message that needs to be sent to the SN. Alternatively, the UE may forward, to the SN via the MN, an RRC message to the SN. To be specific, the UE sends the RRC message to the MN (an RRC message to the SN is encapsulated in the RRC message to the MN), and then the MN forwards, to the SN, the RRC message of the SN. MR-DC include various DC, such as EN-DC, NGEN-DC, NE-DC and NR-DC.

In the EN-DC, a master access network device is an LTE base station eNB connected to a 4G core network EPC, and a secondary access network device is an NR base station.

In the NGEN-DC, the master access network device is an LTE base station ng-eNB connected to a 5G core network 5GC, and a secondary access network device is an NR base station.

In the NE-DC, the master access network device is an NR base station connected to a 5G core network 5GC, and a secondary access network device is an LTE base station.

In the NR-DC, the master access network device is an NR base station connected to a 5G core network 5GC, and the secondary access network device is an NR base station.

For one piece of MR-DC UE, a user plane of the secondary access network device may be connected to a core network connected to the master access network device (that is, the core network may directly send data to the UE via the secondary access network device).

It may be understood that dual connectivity in embodiments of this application may also be referred to as dual link, and multi-connectivity may also be referred to as multi-link.

A basic idea of a minimization of drive tests (Minimization of Drive-Tests, MDT) technology is that operators replace some conventional drive test work with measurement and reporting measurement results performed by commercial terminals of subscribed users, to automatically collect measurement data of the terminals, to detect problems and faults in a wireless network for optimization. Application scenarios of the technology are as follows: The operators usually perform routine network coverage drive tests every month, and also perform call quality drive tests in specific areas to address user complaints, where MDT may be used to replace the tests in these scenarios. The existing MDT technology may include the following collected measurement types:
1. Signal level measurement: The UE measures a signal level of a radio signal, and sends a measurement result to a base station or a base station controller.
2. Quality of service (Quality of Service, QoS) measurement: Generally, a base station performs QoS measurement (for example, service traffic measurement, service throughput measurement, and service delay measurement); UE performs measurement, for example, uplink processing delay measurement; or a base station and UE perform joint processing, for example, air interface delay measurement (measuring a time from a moment at which a data packet passes through an SDAP/a PDCP layer of the base station to a moment at which the data packet arrives at an SDAP/a PDCP layer of the UE).
3. Accessibility measurement: The UE records information about a radio resource control (Radio Resource Control, RRC) connection setup failure, and sends the information to a base station or a base station controller.

The MDT includes logged MDT (logged MDT) (or referred to as logged MDT) and immediate MDT (immediate MDT). The immediate MDT mainly collects measurement of UE in an RRC connected mode (RRC_CONNECTED), and the logged MDT mainly collects measurement of UE in an RRC idle mode (RRC_IDLE) or RRC inactive mode (RRC_INACTIVE) (for example, the UE in the idle mode or the UE in the inactive mode measures a cell of a frequency corresponding to a cell on which the UE is currently camped and an inter-frequency/inter-RAT neighboring cell corresponding to cell reselection broadcast in a cell on which the UE is currently camped, and the UE records and sends these measurement results to the base station). Generally, the immediate MDT is used to measure a data volume, an IP throughput, a packet transmission delay, a packet loss rate, and a processing delay of the UE. The logged MDT generally refers to measurement performed by the UE on received signal strength.

In radio, some layer 2 measurements are further defined for some network performance statistics on a network side, to perform functions such as radio link management, radio resource management, and network maintenance. Some layer 2 measurements are performed for statistics on one UE, for example, a service throughput, service traffic, a processing delay of the UE, and an air interface delay of the UE.

An access network device initiates MDT measurement collection tasks in two scenarios: signaling-based MDT (signaling based MDT) and management-based MDT (management based MDT). The signaling-based MDT is MDT for a specific UE. The access network device receives, from a core network (core network, CN), a message for performing MDT on the UE. The management-based MDT is MDT not for a specific UE. The access network device receives a message for performing MDT from an operation, administration and maintenance (Operation Administration and Maintenance, OAM) or an element manager (element manager, EM). For the management-based MDT, the access network device selects, according to a specific policy, one piece of UE from UEs served by the access network device to perform MDT measurement collection. For the signaling-based MDT, the CN does not initiate signaling-based MDT for UE unless the user has agreed to perform an MDT. For the management-based MDT, when selecting UE, the access network device may consider whether the UE has agreed to perform MDT. For example, the access network device selects only UEs that have agreed to perform the MDT to perform MDT measurement collection.

For some streaming services or voice services, such as streaming media services (streaming service) and multimedia telephony services for IP multimedia system (Multimedia Telephony Service for IMS, MTSI), signal quality alone cannot reflect user experience of these services. Therefore, operators want to know about user experience, to better optimize networks and improve user experience. This type of measurement collection is referred to as quality of experience (Quality of Experience, QoE) measurement collection, which may also be referred to as application layer measurement collection. This type of measurement collection is also initiated using signaling-based MDT and management-based MDT. The access network device receives measurement configuration information from the CN, the OAM, or the EM (for example, the configuration information is sent to the access network device using a transparent container). Refer to FIG. 1D. FIG. 1D is a schematic diagram of an MDT measurement process according to an embodiment of this application. As shown in FIG. 1D, an access network device sends the configuration to UE (for example, via an RRC message). After receiving measurement results of an application layer (for example, an RRC layer of the UE receives the measurement results of the application layer from an upper layer (including the application layer, or an intermediate layer between the RRC layer and the application layer) of the UE), the UE sends the measurement results to the access network device (for example, the measurement results are sent to the access network device in a transparent container encapsulation mode). In addition to the foregoing measurement configuration information, the information received by the access network device from the CN or the OAM may further include other information of QoE measurement (for example, an area scope of the QoE measurement and a service type of the QoE measurement), and the like. A method for selecting UE by the access network device to perform QoE measurement is basically the same as that of common MDT measurement.

In addition, in a wireless network communication system, there is a type of special radio bearers (Radio Bearers, RB), that is, signaling radio bearers (Signaling Radio Bearers, SRB), for transmitting RRC and non-access stratum (Non-Access Stratum, NAS) messages. The SRBs include SRB 0, SRB 1, SRB 2, SRB 3, and SRB 4. The SRB 0 corresponds to common control channels (Common Control Channel, CCCH) and is for RRC messages. The SRB 1 corresponds to dedicated control channels (Dedicated Control Channel, DCCH) (the RRC messages may carry NAS messages) and is for RRC messages. The SRB 2 corresponds to DCCHs and is for NAS messages. The SRB 2 has a lower transmission priority than the SRB 1. In (NG) EN-DC or NR-DC, the SRB 3 corresponds to a DCCH, and a specific RRC message may be transmitted by using the SRB 3. The SRB 3 is used to directly transmit an RRC message between a secondary access network device and the UE. The SRB 4 corresponds to a DCCH and is used to transmit an RRC message including a measurement result of an application layer (that is, a QoE measurement result).

In a current technology, after obtaining the QoE measurement result, the terminal device sends the QoE measurement result to the access network device by using the SRB 4. However, how the secondary access network device triggers or configures QoE measurement for the terminal device and how the terminal device sends a corresponding measurement result in an MR-DC scenario are not involved.

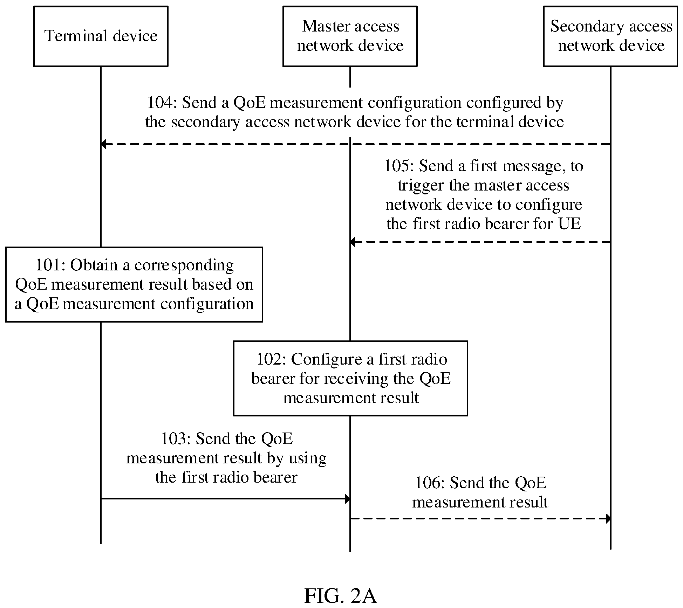

Embodiments of this application provide a method for resolving the foregoing problems. FIG. 2A is a schematic flowchart of a communication method according to an embodiment of this application. As shown in FIG. 2A, the method includes the following steps.
101: A terminal device obtains a corresponding quality of experience QoE measurement result based on a QoE measurement configuration, where the QoE measurement result includes a QoE measurement result corresponding to a secondary access network device.
102: A master access network device configures a first radio bearer for receiving the QoE measurement result.
103: The terminal device sends the QoE measurement result by using the first radio bearer.

In embodiments of this application, the master access network device, the secondary access network device, and the terminal device are instantiated as an MN, an SN, and UE for description.

QoE refers to user experience on QoS of a network and services. The QoS focuses on improvement of network-layer parameters such as a delay, jitter, and a packet loss rate. However, the improvement of these indicators varies with user experience. For example, when pixelation occurs in a video, a QoS index does not significantly change, but users are sensitive to user experience of pixelation. Therefore, QoE measurement in a network is very important, which may be performed based on QoS. In addition, different QoE measurement may also be configured for different services, for example, a delay-sensitive service and a packet loss rate-sensitive service. Specific content of the QoE measurement configuration may have various forms. This is not limited in this application. For example, for a streaming media service, the QoE measurement configuration may include at least one of the following: an access point for sending the QoE measurement result, a format for sending the QoE measurement result, an interval for sending the QoE measurement result, and the like. For example, reference may be made to the descriptions in section 10.5 in 3rd Generation Partnership Project (3rd Generation Partnership Project, 3GPP) 26.247. The QoE measurement configuration may be configured in an extensible markup language (Extensible Markup Language, XML) format. The QoE measurement result includes a measurement result of an application layer. Specific content of the QoE measurement result may have various forms. This is not limited in this application. For example, for a streaming media service, the QoE measurement result may include at least one of the following: representation switch events, an average throughput, an initial playout delay, a buffer level, a play list, media presentation description information, a playout delay for media start-up, device information, and the like. For example, reference may be made to the description in section 10.2 in 3GPP 26.247. For example, for a multimedia phone for an IP multimedia system, the QoE measurement result may include at least one of the following: corruption duration, successive loss of real-time transport protocol (Real-time Transport Protocol, RTP) packets, a frame rate, jitter duration, sync loss duration, roundtrip time, an average codec bitrate, codec information, and the like. For example, reference may be made to the description in section 16.2 in 3GPP 26.114. It may be understood that the QoE measurement result may be represented in various forms, for example, may be represented in an XML format.

Optionally, the QoE measurement result corresponding to the SN represents a measurement result corresponding to the QoE measurement configuration configured by the SN for the UE, or a measurement result corresponding to the QoE measurement configuration that the SN triggers the MN to configure for the UE. The QoE measurement configuration configured by the SN for the UE, or the QoE measurement configuration that the SN triggers the MN to configure for the UE may be referred to as a first QoE measurement configuration. The SN may directly send first QoE measurement configuration to the UE; or the MN obtains the first QoE measurement configuration from the SN, and then sends the first QoE measurement configuration to the UE; or the SN sends a request to the MN to obtain the QoE measurement result or request QoE measurement, and triggers the MN to configure the QoE measurement configuration for the UE, and then the MN configures the first QoE measurement configuration for the UE and sends the first QoE measurement configuration to the UE.

The configured QoE measurement configuration may be understood as a generated or produced QoE measurement configuration.

Optionally, when obtaining the first QoE measurement configuration, the UE may further obtain identification information, where the identification information identifies that the first QoE measurement configuration is configured by the SN for the UE, or is configured by the MN that is triggered by the SN for the UE. The identification information may be included in the first QoE measurement configuration, or may be sent by the MN to the UE by using another information element or signaling.

Optionally, if the UE does not know whether the first QoE measurement configuration is configured by the MN or the SN, and only the MN and the SN learn from each other that the first QoE measurement configuration is configured for the SN, the MN forwards a measurement result corresponding to the received QoE measurement configuration to the SN.

Optionally, the QoE measurement result corresponding to the SN may alternatively represent a QoE measurement result received by the SN. For example, for a service of a specific type or a service within a specific time period, the MN configures the QoE measurement configuration for the UE. However, after the UE obtains the QoE measurement result based on the QoE measurement configuration, the UE sends the QoE measurement result to a receiving object (SN) specified by the MN. Information about the specified receiving object may be sent by the MN to the UE in advance, or may be sent together with the QoE measurement configuration to the UE.

Both signaling-based QoE measurement and management-based QoE measurement may trigger the SN to select the UE for QoE measurement.

For the signaling-based QoE measurement, when delivering the QoE measurement configuration to the MN, a core network may indicate whether the measurement configuration is a QoE measurement configuration corresponding to the MN or a QoE measurement configuration corresponding to the SN. Alternatively, two configurations may be carried at the same time, one is the QoE configuration corresponding to the MN, and the other is the QoE configuration corresponding to the SN. The MN forwards, to the SN, the QoE configuration corresponding to the SN. Then, the MN and the SN separately generate a QoE measurement configuration to be delivered to the UE. For example, when delivering the QoE measurement configuration to an access network device, the core network carries one or two QoE measurement configurations, and indicates whether the QoE measurement configuration corresponds to an E-UTRA QoE measurement configuration or an NR QoE measurement configuration (for example, the two QoE measurement configurations are placed at different locations or have different information element names, or there is an explicit indication indicating whether a corresponding QoE measurement configuration is the E-UTRA QoE measurement configuration or the NR QoE measurement configuration).

For the management-based QoE, the OAM or EM of the MN and the SN delivers a corresponding QoE configuration to the MN and the SN respectively. Then, the MN and the SN separately select corresponding UEs for QoE measurement configuration.

Before the terminal device obtains a corresponding QoE measurement result based on the QoE measurement configuration, a process in which the UE obtains the QoE measurement configuration (that is, the foregoing first QoE measurement configuration) may be further included. Optionally, based on the foregoing descriptions, for the process in which the UE obtains the QoE measurement configuration, the method in this embodiment of this application may alternatively include step 104 shown in FIG. 2A: The UE obtains, from the SN, the QoE measurement configuration configured by the SN for the UE. Optionally, the method may alternatively include step 105: The SN sends a first message to the MN, to trigger the MN to configure the first radio bearer for the UE. Optionally, the first message may be in various forms. For example, the first message may indicate that the SN has configured the QoE measurement for the UE or subsequently configure the QoE measurement, or the SN requests the MN to configure the first radio bearer for the UE. This is not limited in this application. Optionally, a sequence between steps 104 and 105 is not limited in this embodiment of this application.

Optionally, the process in which the UE obtains the QoE measurement configuration may alternatively be as follows: The MN obtains, from the SN, the QoE measurement configuration configured by the SN for the UE, and then the MN delivers, to the UE, the QoE measurement configuration configured by the SN for the UE.

The MN may obtain, from the SN, for example, in the following two manners, the QoE measurement configuration configured by the SN for the UE.

Manner 1: The SN sends the generated QoE measurement configuration to the MN, and then the MN sends the QoE measurement configuration generated by the SN to the UE. For example, the message sent by the SN to the MN carries an RRC message generated by the SN, and the RRC message carries the QoE measurement configuration sent by the SN to the UE. Then, the MN carries the RRC message generated by the SN in an RRC reconfiguration message that is sent to the UE. In this process, the QoE measurement configuration configured by the SN for the UE is transparent to the MN.

Manner 2: The SN sends second information to the MN, where the second information carries the QoE measurement configuration configured by the SN for the UE. The second information is not carried in the RRC message generated by the SN, but is explicitly notified by the SN to the MN. The MN generates the RRC message based on the second information, where the RRC message includes the QoE measurement configuration configured by the SN for the UE. The MN sends the RRC message to the UE. In this process, the MN may learn of the QoE measurement configuration configured by the SN for the UE.

Optionally, the process in which the UE obtains the QoE measurement configuration may alternatively be as follows: The SN sends first request information to the MN, to request the MN to configure the QoE measurement configuration for the UE (that is, the QoE measurement configuration configured by the MN, triggered by the SN, for the UE). After receiving the first request information, the MN configures the QoE measurement for the UE (that is, generates the QoE measurement configuration and delivers it to the UE), where the generated QoE measurement configuration includes a QoE measurement configuration for obtaining the QoE measurement result corresponding to the SN. Optionally, the first request information further includes a service type corresponding to the QoE measurement that the SN requests the MN to configure for the UE.

After receiving the QoE measurement configuration, the UE performs corresponding measurement collection, obtains the QoE measurement result, and sends the QoE measurement result to a network side.

In a possible implementation, the first radio bearer used by the UE to send the QoE measurement result is a radio bearer configured by the MN for the UE.

It may be understood that the radio bearer configured by the MN for the UE in this embodiment of this application is a radio bearer between the MN and the UE.

Optionally, the MN may configure a new radio bearer as the first radio bearer for the UE, in addition to the radio bearer currently configured by the MN for the UE. For example, the MN adds a new radio bearer as the first radio bearer for the UE by using an information element radio bearer addition or modification list (for example, drb-ToAddModList) in an RRC reconfiguration message. Alternatively, the MN may select a radio bearer from radio bearers currently configured by the MN for the UE as the first radio bearer. Then, the radio bearer is used by the UE to send the QoE measurement result corresponding to the SN. In some possible implementations, the first radio bearer may be a radio bearer dedicated to sending the QoE measurement result corresponding to the SN, or may be a radio bearer for sending the QoE measurement result corresponding to the SN.

Alternatively, a logical channel (a first logical channel) may be added for the UE in the newly added first radio bearer by using an information element RLC bearer addition or modification list (for example, rlc-BearerToAddModList) in the RRC reconfiguration message, to transmit the QoE measurement result corresponding to the SN. In some possible implementations, the first logical channel may be a logical channel dedicated to sending the QoE measurement result corresponding to the SN, or may be a logical channel for sending the QoE measurement result corresponding to the SN.

In this embodiment of this application, the master access network device configures the radio bearer for the terminal device to send the quality of experience measurement result, so that possible impact on other signaling or data transmission in a process of sending the quality of experience measurement result can be reduced. In addition, the master access network device may set different logical channel priorities for different radio bearers, so that the terminal device may transmit signaling or data on different radio bearers based on the priorities set for the different radio bearers when obtaining an uplink transmission grant.

Optionally, the first radio bearer may alternatively be an existing radio bearer that has been configured by the MN for the UE, and then a new logical channel (the first logical channel) is added for the UE by using the information element RLC bearer addition or modification list (for example, rlc-BearerToAddModList) in the RRC reconfiguration message, to transmit the QoE measurement result corresponding to the SN.

It may be understood that there may be a plurality of logical channels in the first radio bearer. The first logical channel may be dedicatedly used by the UE to send the QoE measurement result corresponding to the SN, and another logical channel is used to transmit other information. For example, the another logical channel may be used to send the QoE measurement result corresponding to the MN (including a measurement result corresponding to the QoE measurement configuration actively configured by the MN for the UE, instead of the measurement result corresponding to the QoE measurement configuration that the SN triggers the MN to configure for the UE). The two measurement results correspond to different logical channel identifiers. Alternatively, the first logical channel may be used to send the QoE measurement result corresponding to the SN, or may be used to send the other information. It is assumed that, the first logical channel may be used to send the QoE measurement result corresponding to the SN, or send the QoE measurement result corresponding to the MN, and the two measurement results correspond to a same logical channel identifier.

In this embodiment of this application, the terminal device sends the QoE measurement result corresponding to the SN through the first logical channel in the first radio bearer. In this way, possible impact on other signaling or data caused when the QoE measurement result is sent can be reduced. In addition, when a logical channel used to transmit the QoE measurement result corresponding to the SN and a logical channel used to transmit other signaling or data correspond to a same radio bearer, management efficiency of the plurality of logical channels can be improved and radio bearer resources can be fully utilized by multiplexing the radio bearer through division of the logical channels.

It may be understood that a sequence of step 101 and step 102 is not limited in this embodiment of this application. To be specific, the terminal device may obtain the QoE measurement result before or after the master access network device configures the first radio bearer for the terminal device.

The first radio bearer may be an SRB, or may be a DRB. For example, when the first radio bearer is an SRB, the first radio bearer may be an SRB 4, and the SRB 4 may be used to transmit a QoE measurement result in a non-MR-DC scenario. In this embodiment of this application, the SRB 4 may also be used to transmit a QoE measurement result corresponding to the SN in an MR-DC scenario. Alternatively, the first radio bearer may be an SRB 5, an SRB 6, or any other newly added radio bearer that has not been used to transmit signaling. The SRB 5 and the SRB 6 may alternatively have other names, indicating SRBs different from an SRB 1 to the SRB 4. When the first radio bearer is a DRB, an SDAP layer may not be configured for the DRB.

An occasion on which the MN configures the first radio bearer or the first logical channel is not limited in this embodiment of the present invention. For example, the occasion may include:
(1) If the MN delivers, to the UE, the QoE measurement configuration configured by the SN, and the SN sends, via the RRC message, the QoE measurement configuration configured by the SN to the MN, the occasion for configuring the first radio bearer or the first logical channel may be a time after the MN receives the first message (or first information) sent by the SN, where the first message (or the first information) is used to trigger the MN to configure the first radio bearer for the UE. Optionally, a sequence in which the SN sends the QoE measurement configuration generated by the SN to the MN and the SN sends the first message to the MN is not limited in this embodiment of this application. It may be understood that the explicit first message may not be necessary. Alternatively, the QoE measurement configuration configured by the SN for the UE may be carried in a message sent by the SN to the MN, to implicitly trigger the MN to configure the first radio bearer for the UE.

If the second information sent by the SN to the MN carries the QoE measurement configuration configured by the SN for the UE, the first radio bearer or the first logical channel may be configured after the MN receives the second information.

If the SN sends the first request information to the MN to request the MN to configure the QoE measurement configuration for the UE, the first radio bearer may be configured after the MN receives the first request information.

Alternatively, the MN may configure the first radio bearer or the first logical channel after the UE requests to send the QoE measurement result.

(2) If the SN delivers the QoE measurement configuration configured by the SN to the UE, the occasion for configuring the first radio bearer or the first logical channel may be that the SN sends the first message to the MN, to trigger the MN to configure the first radio bearer or the first logical channel. Alternatively, the MN may automatically configure the first radio bearer or the first logical channel after the UE requests to send the QoE measurement result.

The MN may configure the first radio bearer for the UE and the MN sends, to the UE, the QoE measurement configuration corresponding to the SN via a same message or different messages.

Optionally, in a CU/DU scenario, when a radio bearer for transmitting the QoE measurement result corresponding to the SN and a radio bearer for transmitting the QoE measurement result corresponding to the MN are two different radio bearers, when a CU of the MN requests a DU of the MN to establish an SRB or a DRB, whether the SRB or the DRB is for the QoE measurement result corresponding to the SN or for the QoE measurement result corresponding to the MN is indicated. When a radio bearer for transmitting the QoE measurement result corresponding to the SN and a radio bearer for transmitting the QoE measurement result corresponding to the MN are a same radio bearer but use different logical channels, when the CU of the MN requests the DU of the MN to establish or modify an SRB or a DRB, the CU requests the DU to establish a logical channel, indicating that the logical channel is used to transmit the QoE measurement result corresponding to the SN or the QoE measurement result corresponding to the MN.

Optionally, when the first radio bearer is an SRB, if a radio bearer for transmitting the QoE measurement result corresponding to the SN and a radio bearer for transmitting the QoE measurement result corresponding to the MN are two different radio bearers, an RRC layer of the UE sends the QoE measurement result corresponding to the SN to a PDCP entity corresponding to the first radio bearer, and sends the QoE measurement result corresponding to the MN to a PDCP entity corresponding to the radio bearer. Correspondingly, after receiving the measurement result, the MN knows, based on a radio bearer through which the measurement result is received, whether the measurement result is the QoE measurement result corresponding to the MN or the QoE measurement result corresponding to the SN.

Optionally, when the first radio bearer is an SRB, if a radio bearer for transmitting the QoE measurement result corresponding to the SN and a radio bearer for transmitting the QoE measurement result corresponding to the MN are a same radio bearer and use a same logical channel identifier, the QoE measurement result corresponding to the SN is placed in an RRC message corresponding to the SN, where the RRC message is encapsulated in an RRC message for the MN. For example, an RRC message MeasReportAppLayer sent by the UE to the SN is encapsulated in an RRC message MeasReportAppLayer sent by the UE to the MN. MeasReportAppLayer is used to send the QoE measurement result. Alternatively, the UE may send the measurement result by including indication information, indicating whether the measurement result is the QoE measurement result corresponding to the SN or the QoE measurement result corresponding to the MN (for example, an RRC message MeasReportAppLayer that is sent by the UE to the MN carries indication information, indicating which node the measurement result corresponds to). Correspondingly, after receiving the measurement result, the MN knows, depending on whether the measurement result is encapsulated in the RRC message of the MN or based on the indication information, whether the measurement result is the QoE measurement result corresponding to the SN or the QoE measurement result corresponding to the MN.

Optionally, when the first radio bearer is an SRB, if a radio bearer for transmitting the QoE measurement result corresponding to the SN and a radio bearer for transmitting the QoE measurement result corresponding to the MN are a same radio bearer but use different logical channel identifiers, an RRC layer of the UE generates an RRC message, where the message carries the QoE measurement result corresponding to the SN or the QoE measurement result corresponding to the MN. When sending the RRC message to a PDCP entity of the first radio bearer, the RRC layer of the UE may notify that the RRC message corresponds to a QoE measurement result of which node, or a logical channel through which the RRC message should be transmitted. Correspondingly, after receiving the measurement result, the MN knows, based on the logical channel through which the measurement result is received, whether the measurement result is the QoE measurement result corresponding to the SN or the QoE measurement result corresponding to the MN.

Optionally, when the first radio bearer is a DRB, if a radio bearer for transmitting the QoE measurement result corresponding to the SN and a radio bearer for transmitting the QoE measurement result corresponding to the MN are two different radio bearers, an RRC layer of the UE or an upper layer of the RRC layer of the UE sends, to a PDCP entity corresponding to the radio bearer, the QoE measurement result corresponding to the SN to the PDCP entity corresponding to the first radio bearer, and sends the QoE measurement result corresponding to the MN. Correspondingly, after receiving the measurement result, the MN knows, based on a radio bearer through which the measurement result is received, whether the measurement result is the QoE measurement result corresponding to the SN or the QoE measurement result corresponding to the MN.

Optionally, when the first radio bearer is a DRB, if a radio bearer for transmitting the QoE measurement result corresponding to the SN and a radio bearer for transmitting the QoE measurement result corresponding to the MN are a same radio bearer and use a same logical channel identifier, an RRC layer of the UE or an upper layer of the RRC layer of the UE sends, to a PDCP entity corresponding to the first radio bearer, the QoE measurement result corresponding to the MN or the QoE measurement result corresponding to the SN, and notifies which node or which service type the QoE measurement result corresponds to. When the PDCP entity generates a PDCP PDU, indication information may be carried in a header of the PDCP PDU, to indicate a measurement result corresponding to a measurement configuration corresponding to which node or indicate a corresponding service type. Correspondingly, after receiving the measurement result, the MN knows, based on the indication information, whether the measurement result is the QoE measurement result corresponding to the SN or the QoE measurement result corresponding to the MN.

Optionally, when the first radio bearer is a DRB, if a radio bearer for transmitting the QoE measurement result corresponding to the SN and a radio bearer for transmitting the QoE measurement result corresponding to the MN are a same radio bearer but use different logical channel identifiers, an RRC layer of the UE or an upper layer of the RRC layer of the UE sends, to a PDCP entity corresponding to the first radio bearer, the QoE measurement result corresponding to the SN or the QoE measurement result corresponding to the MN, and notifies which node the QoE measurement result corresponds to or a logical channel through which the measurement result is transmitted. Correspondingly, after receiving the measurement result, the MN knows, based on the logical channel through which the measurement result is received, whether the measurement result is the QoE measurement result corresponding to the SN or the QoE measurement result corresponding to the MN.

In addition, because the QoE measurement result sent by the UE includes the measurement result corresponding to the QoE measurement configuration configured by the SN for the UE, the method may further include:
106: The MN sends the QoE measurement result to the SN or another entity.

Optionally, the MN may learn, by using the method in the foregoing step 104 or step 105, whether the currently received measurement result is the QoE measurement result corresponding to the SN or the QoE measurement result corresponding to the MN. If the measurement result is the QoE measurement result corresponding to the SN, the MN sends the QoE measurement result to the SN or the another entity (for example, a trace collection entity (Trace Collection Entity, TCE)), and the another entity further perform analysis on the QoE measurement result. For example, the SN previously sends, to the MN, some information corresponding to the QoE measurement configuration configured by the SN, where the information may include at least one of the following: a tracking identifier, a TCE IP address, a TCE ID, and a mapping relationship between a TCE IP address and a TCE ID. Then, the MN may send the QoE measurement result configured by the SN to the TCE based on the information. Optionally, if the MN sends the QoE measurement result to the SN, the SN may send the QoE measurement result to the another entity, for example, the TCE.

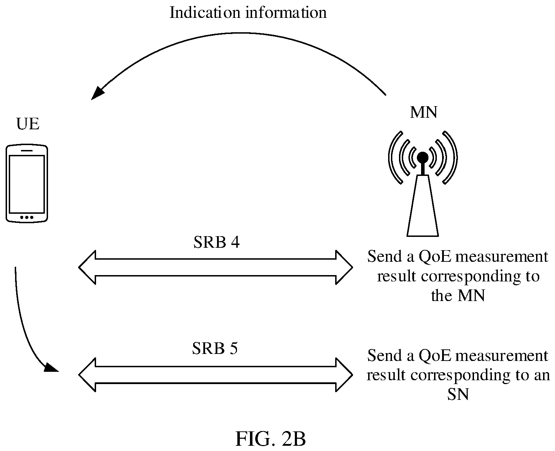

In some cases, refer to FIG. 2B. FIG. 2B is a schematic diagram of a specified radio bearer process according to an embodiment of this application. As shown in FIG. 2B, if an MN has a plurality of radio bearers used by UE to send a QoE measurement result, for example, an SRB 4 is used by the UE to send a QoE measurement result corresponding to the MN, the MN establishes a first radio bearer for the UE to transmit a QoE measurement result corresponding to an SN. For example, the first radio bearer is referred to as an SRB 5, and the SRB 5 corresponds to a DCCH, configured to transmit an RRC message including carrying a QoE measurement result corresponding to the SN. Before sending the QoE measurement result, the UE may receive indication information from the MN. The indication information may indicate that a QoE measurement configuration delivered by the MN is configured by the MN or the SN (for example, the MN carries the indication information in a QoE measurement configuration message delivered by the MN), or may indicate that a currently established radio bearer is used to transmit the QoE measurement result corresponding to the MN, or used to transmit the QoE measurement result corresponding to the SN (for example, the MN carries the indication information in a radio bearer setup message delivered by the MN). Then, the UE determines, based on the indication information, a QoE measurement result that currently needs to be sent is sent from the first radio bearer or another radio bearer. If the MN uses a same radio bearer for the UE to send all QoE measurement results, and different logical channels are used to transmit the QoE measurement result corresponding to the MN and the QoE measurement result corresponding to the SN (for example, transmitted by two different logical channels in the SRB 4). Before sending the QoE measurement result, the UE needs to receive indication information from the MN. The indication information may indicate that a QoE measurement configuration delivered by the MN is configured by the MN or the SN (for example, the MN carries the indication information in a QoE measurement configuration message delivered by the MN), or may indicate that a currently established logical channel is used to transmit the QoE measurement result corresponding to the MN, or used to transmit the QoE measurement result corresponding to the SN (for example, the MN carries the indication information when a logical channel is added in a setup modification or a radio bearer setup message delivered by the MN). Then, the UE determines, based on the indication information, from which logical channel of the first radio bearer to send, a QoE measurement result that currently needs to be sent. In this way, after receiving the QoE measurement result, the MN may determine, based on a radio bearer or a logical channel corresponding to the received QoE measurement result, whether to forward the QoE measurement result to the SN without requiring another additional determining, and this improves data transmission efficiency.

It should be noted that the MN in the foregoing embodiment may be an MN that configures the first radio bearer or a first logical channel for the UE in a non-handover scenario, or may be an MN after a mobility change (the MN after the mobility change may be referred to as a target MN, and an MN before the mobility change may be referred to as a source MN. The target MN obtains, from the source MN, the first radio bearer or the first logical channel configured by the source MN for the UE, and the target MN notifies the UE to inherit the first radio bearer or the first logical channel configured by the source MN or the target MN reconfigures a new first radio bearer or first logical channel for the UE to transmit the QoE measurement result, so that the UE may send the QoE measurement result to the target MN). It may be understood that, that the target MN notifies the UE to inherit the first radio bearer or the first logical channel configured by the source MN, or the target MN reconfigures a new first radio bearer or first logical channel for the UE to transmit the QoE measurement result may also be understood as a manner in which the MN configures the first radio bearer for receiving the QoE measurement result.

In this embodiment of this application, the MN sends the indication information to the UE, to indicate that the first radio bearer or first logical information of the first radio bearer is used to send the QoE measurement result. This can avoid a possible channel confusion problem caused when a same MN configures a plurality of radio bearers for a UE to send QoE measurement results corresponding to different objects, for example, different network sides, or different service types.

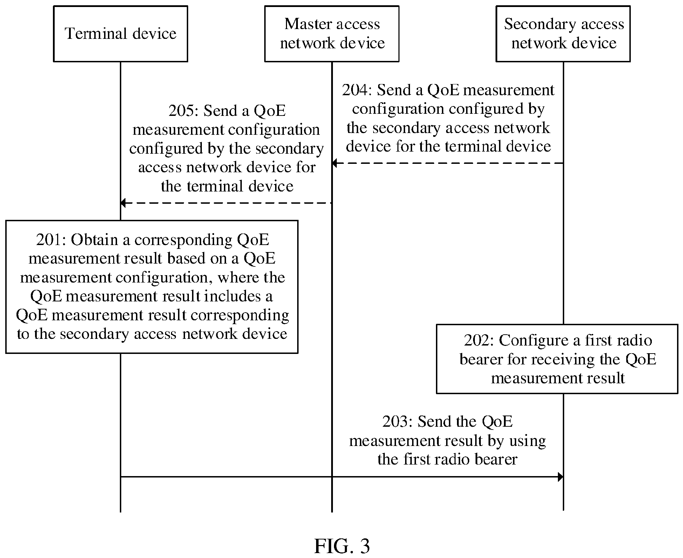

In addition, refer to FIG. 3. FIG. 3 is a schematic flowchart of another communication method according to an embodiment of this application. As shown in FIG. 3, the method includes the following steps.

201: A terminal device obtains a corresponding quality of experience QoE measurement result based on a QoE measurement configuration, where the QoE measurement result includes a QoE measurement result corresponding to a secondary base station SN.

202: A secondary access network device configures a first radio bearer for receiving the QoE measurement result.

203: The terminal device sends the QoE measurement result by using the first radio bearer.

Similarly, in this embodiment of this application, a master access network device, the secondary access network device, and the terminal device are instantiated as an MN, an SN, and UE for description.

In this embodiment of this application, the first radio bearer used by the UE to send the QoE measurement result may be a radio bearer configured by the SN for the UE. The QoE measurement result corresponding to the SN indicates a measurement result corresponding to a QoE measurement configuration configured by the SN for the UE.

The SN may configure a new radio bearer as the first radio bearer for the UE in addition to the radio bearer configured by the current SN for the UE. For example, the SN adds a new radio bearer as the first radio bearer for the UE by using an information element radio bearer addition or modification list (for example, drb-ToAddModList) in an RRC reconfiguration message. The first radio bearer may be an SRB 4, and the SRB 4 may be used to transmit a QoE measurement result in a non-MR-DC scenario. In this embodiment of this application, similarly, a QoE measurement result corresponding to the SN in an MR-DC scenario may be transmitted. Alternatively, the first radio bearer may be an SRB 5, an SRB 6, or any other newly added radio bearer that is not used to transmit signaling. The SRB 5 corresponds to a DCCH, and is used to transmit an RRC message including carrying the QoE measurement result corresponding to the SN. Alternatively, the SN may select a radio bearer from radio bearers currently configured by the SN for the UE as the first radio bearer. For example, a logical channel (a first logical channel) may be added for the UE in the newly added first radio bearer by using an information element RLC bearer addition or modification list (for example, rlc-BearerToAddModList) in the RRC reconfiguration message, to transmit the QoE measurement result corresponding to the SN.

It may be understood that the first radio bearer configured by the secondary access network device for the terminal device in this embodiment of this application is a radio bearer between the secondary access network device and the terminal device.

Optionally, the first radio bearer includes a plurality of logical channels, and the first logical channel is used to transmit the QoE measurement result of corresponding to the SN. The first logical channel may further transmit other information, for example, a measurement result corresponding to a mobility measurement configuration configured by the SN for the UE or an RRC reconfiguration complete message sent by the UE to the SN. When the other information and the measurement result corresponding to the QoE are transmitted in a same logical channel, logical channel identifiers are the same. Alternatively, the first logical channel is only used to transmit a measurement result corresponding to the QoE, and when the other information is transmitted in another logical channel, logical channel identifiers corresponding to the first logical channel and the another logical channel are different.

In this embodiment of this application, the secondary base station configures the first radio bearer for the terminal device, so that the terminal device sends the quality of experience measurement result corresponding to the secondary base station. In this way, in a dual connectivity scenario, the secondary base station can establish, by using the secondary base station, the radio bearer to receive the measurement result sent by the terminal device. This effectively resolves a problem of sending the measurement result. In addition, timeliness and reliability of sending, by the terminal device, the QoE measurement result corresponding to the SN in the dual connectivity scenario are ensured.

In addition, the logical channel used to send the QoE measurement result corresponding to the SN may be the first logical channel in the first radio bearer. In this way, on one hand, possible impact on other signaling or data transmission when the QoE measurement result is sent can be reduced, and on the other hand, radio bearer multiplexing is implemented by adding a new logical channel, so that management efficiency of a plurality of radio bearers can be improved and available radio bearer resources can be fully utilized.

An occasion on which the SN configures the first radio bearer or the first logical channel is not limited in this embodiment of the present invention. For example, this occasion may be before the SN sends the QoE measurement configuration configured by the SN to the UE, including after the SN receives a notification message indicating that the QoE measurement configuration needs to be configured for the UE; or may be when or after the SN sends the QoE measurement configuration configured by the SN to the UE. Alternatively, this occasion may be after the UE requests to send the QoE measurement result. The message for the SN to configure the first radio bearer for the UE may be a same message or different messages as the QoE measurement configuration configured by the SN and sent to the UE.

It may be understood that a sequence of step 201 and step 202 is not limited in this embodiment of this application. To be specific, the terminal device may obtain the QoE measurement result before or after the secondary access network device configures the first radio bearer for the terminal device.

Optionally, when the first radio bearer is an SRB, if a radio bearer for transmitting the QoE measurement result corresponding to the SN does not transmit other information (for example, another RRC information) (that is, the radio bearer is dedicated to transmitting the QoE measurement result corresponding to the SN), the QoE measurement result corresponding to the SN is placed in an RRC message corresponding to the SN, and an RRC layer of the UE directly sends the RRC message to a PDCP entity of the first radio bearer. For example, an RRC message MeasReportAppLayer sent by the UE to the SN carries the QoE measurement result corresponding to the SN. Correspondingly, after receiving the RRC message, the SN knows, based on an RRC message name or a radio bearer identifier, whether the RRC message is an RRC message corresponding to the QoE measurement result or an RRC message corresponding to other information.

Optionally, when the first radio bearer is an SRB, if a radio bearer for transmitting the QoE measurement result corresponding to the SN also transmits other information (for example, another RRC information) and uses a same logical channel identifier, the QoE measurement result corresponding to the SN is placed in an RRC message corresponding to the SN. For example, an RRC message MeasReportAppLayer sent by the UE to the SN carries the QoE measurement result corresponding to the SN. Correspondingly, after receiving the RRC message, the SN knows, based on a name of the RRC message, whether the RRC message is an RRC message corresponding to the QoE measurement result or an RRC message corresponding to other information.

Optionally, when the first radio bearer is an SRB, if a radio bearer for transmitting the QoE measurement result corresponding to the SN also transmits other information (for example, another RRC information) but uses different logical channel identifiers for transmission, an RRC layer of the UE generates the RRC message, where the message carries the QoE measurement result corresponding to the SN. For example, an RRC message MeasReportAppLayer sent by the UE to the SN carries the QoE measurement result corresponding to the SN. When sending the RRC message to the PDCP entity of the first radio bearer, the RRC layer of the UE may notify that the RRC message is a corresponding QoE measurement result, or notify a logical channel through which the RRC message should be transmitted. Correspondingly, after receiving the RRC message, the SN knows, based on a logical channel through which the RRC message is received or based on a name of the RRC message, whether the RRC message is an RRC message corresponding to the QoE measurement result or an RRC message corresponding to other information.

Optionally, when the first radio bearer is a DRB, if a radio bearer for transmitting the QoE measurement result corresponding to the SN does not transmit other information (for example, other service information) (that is, the radio bearer is dedicated to transmitting the QoE measurement result), an RRC layer of the UE or an upper layer of the RRC layer of the UE sends the QoE measurement result corresponding to the SN to a PDCP entity corresponding to the first radio bearer. Correspondingly, after receiving the information by using the DRB, the SN knows, based on a radio bearer identifier, whether the information is the QoE measurement result or other service information.

Optionally, when the first radio bearer is a DRB, if a radio bearer for transmitting the QoE measurement result corresponding to the SN also transmits other information (for example, other data service information) and uses a same logical channel identifier, an RRC layer of the UE or an upper layer of the RRC layer of the UE sends the QoE measurement result corresponding to the SN to a PDCP entity corresponding to the first radio bearer and notifies that the data is the QoE measurement result. When the PDCP entity generates a PDCP PDU, indication information may be carried in a header of the PDCP PDU, to indicate that the PDCP PDU carries the QoE measurement result. Correspondingly, after receiving the PDCP PDU, the SN knows, based on the indication information, whether the PDCP PDU corresponds to the QoE measurement result or the other data service information.

Optionally, when the first radio bearer is a DRB, if a radio bearer for transmitting the QoE measurement result corresponding to the SN also transmits other information (for example, other data service information) and uses different logical channel identifiers, an RRC layer of the UE or an upper layer of the RRC layer of the UE sends the QoE measurement result corresponding to the SN to a PDCP entity corresponding to the first radio bearer, and notifies that the data is the QoE measurement result or indicates a logical channel through which the data is transmitted. Then, the PDCP entity sends the corresponding PDCP PDU to an RLC entity corresponding to a determined logical channel. Correspondingly, after receiving the PDCP PDU, the SN knows, based on which logical channel the PDCP PDU is received, whether the PDCP PDU corresponds to the QoE measurement result or the other data service information.

Optionally, in a CU/DU scenario, if the radio bearer for transmitting the QoE measurement result corresponding to the SN does not transmit other information, when a CU of the SN requests a DU of the SN to establish the SRB or the DRB, the CU of the SN indicates whether the SRB or the DRB is used to transmit the QoE measurement result corresponding to the SN or other information. When the radio bearer for transmitting the QoE measurement result corresponding to the SN also transmits the other information, but use different logical channels, and the CU of the SN requests the DU of the SN to establish or modify the SRB or the DRB, the CU may request the DU to establish a logical channel, indicating that the logical channel is used to transmit the QoE measurement result corresponding to the SN or the other information.

In some cases, if the radio bearer for transmitting the QoE measurement result corresponding to the SN does not transmit other information (for example, other data service information), before sending the QoE measurement result, the UE may receive indication information from the SN, where the indication information indicates that the first radio bearer is used to transmit the QoE measurement result corresponding to the SN (for example, the SN carries the indication information in a radio bearer setup message delivered by the SN). If the radio bearer for transmitting the QoE measurement result corresponding to the SN also transmits the other information (for example, the other data service information) and uses the different logical channels for transmission, before sending the QoE measurement result corresponding to the SN, the UE may receive the indication information from the SN, where the indication information indicates whether a currently established logical channel is used to transmit the QoE measurement result corresponding to the SN or is used to transmit the other information (for example, the indication information is carried when the SN adds a logical channel to a radio bearer setup or modification message delivered by the SN). Then, the UE determines, based on the indication information, a logical channel of the first radio bearer on which the QoE measurement result that currently needs to be sent. In this way, after receiving the QoE measurement result, the SN may determine, through a logical channel, whether information carried in the corresponding radio bearer is the QoE measurement result without requiring another additional determining, and this improves data transmission efficiency.

It should be noted that the SN in the embodiment shown in FIG. 3 may be an SN that configures the first radio bearer or the first logical channel for the UE in a non-handover scenario, or may be an SN after a mobility change. The SN after the mobility change may be referred to as a target SN, and an SN before the mobility change may be referred to as a source SN. The target SN obtains, from the source SN, the first radio bearer or the first logical channel configured by the source SN for the UE, and the target SN notifies the UE to inherit the first radio bearer or the first logical channel configured by the source SN or the target SN reconfigures a new first radio bearer or first logical channel for the UE to transmit the QoE measurement result, so that the UE may send the QoE measurement result to the target SN. It may be understood that, that the target SN notifies the UE to inherit the first radio bearer or the first logical channel configured by the source SN or the target SN reconfigures a new first radio bearer or first logical channel for the UE to transmit the QoE measurement result may also be understood as a manner in which the SN configures the first radio bearer for receiving the QoE measurement result.

Same as the description content of the embodiment corresponding to FIG. 2A, that the UE obtains a corresponding QoE measurement result based on the QoE measurement configuration may also include a process in which the UE receives the QoE measurement configuration. As shown in FIG. 3, step 204: The MN obtains, from the SN, the QoE measurement configuration configured by the SN for the UE. Step 205: The MN sends the QoE measurement configuration configured by the SN for the UE to the UE. Alternatively, it may be that the UE directly obtains, from the SN, the QoE measurement configuration configured by the SN for the UE.

That the MN obtains, from the SN, a QoE measurement configuration configured by the SN for the UE may specifically include the following manner: The QoE measurement configuration generated by the SN is sent to the MN, and then the MN sends the QoE measurement generated by the SN to the UE. For example, a message sent by the SN to the MN carries an RRC message generated by the SN, and the RRC message carries the QoE measurement configuration sent by the SN to the UE. Then, the MN carries the RRC message generated by the SN in an RRC reconfiguration message to the UE. In this process, the QoE measurement configuration configured by the SN for the UE is transparent to the MN.

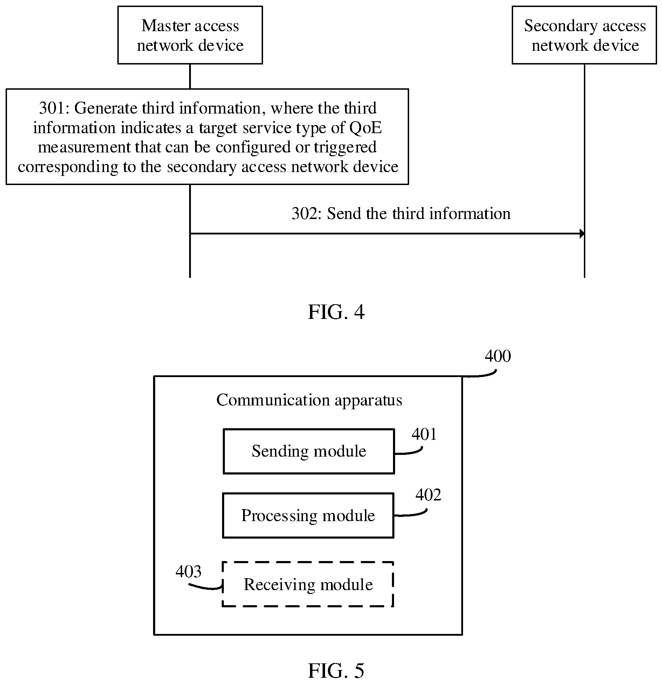

In some cases, as described in the foregoing embodiments, the SN may configure QoE measurement or the SN may trigger the MN to configure QoE measurements for the UE. If both the MN and the SN configure QoE measurement of a same service type for the UE, a former QoE measurement configuration is overwritten by a latter QoE measurement configuration. Consequently, the UE does not know which access network device configures the QoE measurement of the service type, or the QoE measurement of the service type restarts, and application layer quality corresponding to a part of communication that has started of the service type cannot be measured. This embodiment provides a method for negotiating a service type of QoE measurement performed between an MN and an SN, to determine a target service type of QoE measurement that can be configured by the SN or a target service type of QoE measurement that the SN can trigger the MN to configure for the UE, where the target service type is determined by the MN. Specifically, refer to FIG. 4. FIG. 4 is a schematic flowchart of a method for determining a target service type according to an embodiment of this application. The method includes the following steps.

301: A master access network device generates third information, where the third information indicates a target service type of QoE measurement that can be configured or triggered corresponding to a secondary access network device.

302: The secondary access network device obtains the third information from the master access network device.

Similarly, in this embodiment of this application, the master access network device, the secondary access network device, and a terminal device are instantiated as an MN, an SN, and UE for description.

The service type includes a streaming media service, a multimedia telephony service for an IP multimedia system, virtual reality (virtual reality, VR), augmented reality (augmented reality, AR), ultra-reliable low-latency communication (ultra-reliable low-latency communication, URLLC) service, and the like. In an MR-DC scenario, both the MN and the SN can configure the QoE measurement for the UE. In some cases, the MN and the SN may separately perform QoE measurement configuration for all service types. In some other cases, the MN and the SN may negotiate, and the MN determines a target service type of QoE measurement configuration corresponding to the SN, for example, the negotiation is performed by using step 301. The target service type of the QoE measurement that can be configured by the SN is a target service type corresponding to QoE measurement configuration that can be configured by the SN for the UE. The target service type of QoE measurement that can be triggered by the SN is a target service type corresponding to QoE measurement configuration that the SN can trigger the MN to configure for the UE.

Optionally, that the SN obtains third information from the MN may include: The MN actively sends the third information to the SN (for example, after determining a target service type that can be configured by the SN, the MN generates and sends the third information to the SN), to indicate a target service type of QoE measurement that can be configured or triggered corresponding to the SN. Optionally, the third information may be carried in an SN addition request (SN addition request) or SN modification request (SN modification request) message, and the SN determines, based on the received third information, a service type or a service type list on which QoE measurement configuration can be performed.

Alternatively, that the SN obtains the third information from the MN may include: The SN sends second request information to the MN, for example, the request information may be a service type or a service type list of QoE measurement requested by the SN; correspondingly, the MN receives the second request information from the SN, generates the third information based on the second request information, and sends the third information to the SN, to indicate the service type or the service type list of the QoE measurement that can be configured or triggered by the SN, or indicate to accept a service type or a service type list of QoE measurement requested by the SN. Optionally, if the MN does not accept the request of the SN, the MN may reject the request of the SN. Alternatively, the second request information may be that the SN requests QoE measurement, and the MN generates and sends the third information to the SN based on the second request information, to indicate the service type or the service type list of the QoE measurement that can be configured or triggered by the SN. Optionally, the second request information sent by the SN may be carried in an SN Modification required message, and the third information sent by the MN may be carried in an SN modification confirm (SN modification confirm) message.

Optionally, the third information sent by the MN to the SN may be the service type or the service type list of the QoE measurement that can be configured or triggered by the SN, or may be the service type or the service type list of the QoE measurement that has been configured by the MN. Therefore, the SN can know, based on the service type or the service type list of the QoE measurement configured by the MN, the service type of the QoE measurement that can be configured or triggered by the SN.

Optionally, the SN determines, based on the obtained third information, whether a QoE measurement configuration can be delivered to the UE, and whether a QoE measurement configuration corresponding to the service type can be delivered. The SN may send, to the UE by using an SRB 3, the QoE measurement configuration configured by the SN. Alternatively, the SN sends the generated QoE measurement configuration to the MN, and then the MN sends the QoE measurement generated by the SN to the UE. For example, a message sent by the SN to the MN carries an RRC message generated by the SN, and the RRC message carries the QoE measurement configuration sent by the SN to the UE. Then, the MN carries the RRC message generated by the SN in an RRC reconfiguration message to the UE. In this process, the QoE measurement configuration configured by the SN for the UE is transparent to the MN.

In this embodiment of this application, the MN determines the target service type corresponding to the QoE measurement configuration corresponding to the SN, so that the MN and the SN can negotiate the target service type for performing QoE measurement, and this avoids repeated configuration of a service of a same type, and improves configuration efficiency.

After the secondary access network device determines, based on the received third information, the target service type corresponding to the QoE measurement configuration corresponding to the secondary access network device, the following step may be included. 303: The master access network device or the secondary access network device configures the QoE measurement configuration of the target service type for the terminal device. The QoE measurement configuration corresponding to the secondary access network device may be a QoE measurement configuration configured by the secondary access network device, or may be a QoE measurement configuration that the secondary access network device triggers the master access network device to configure. Therefore, it may be that the master access network device configures the QoE measurement configuration of the target service type for the terminal device, or the secondary access network device configures the QoE measurement configuration of the target service type for the terminal device. Optionally, for the MN, the MN determines, based on the third information, a service type corresponding to QoE measurement configuration that can be actively configured by the MN for the UE (that is, a service type other than the service type corresponding to the QoE measurement that can be configured by the SN or the service type corresponding to the QoE measurement that the SN can trigger the MN to configure).

In addition, the method may further include the following steps.

304: The terminal device obtains a QoE measurement result corresponding to the secondary access network device based on the QoE measurement configuration, where the QoE measurement result is a measurement result corresponding to the target service type.

A QoE measurement result corresponding to the SN includes: a measurement result corresponding to the QoE measurement configuration configured by the SN for the UE; or a measurement result corresponding to the QoE measurement configuration that the SN triggers the MN to configure for the UE; or a QoE measurement result received by the SN. Therefore, a target service type corresponding to the QoE measurement result corresponding to the SN includes: a target service type in which the SN can generate the QoE measurement configuration for the UE; or a target service type that the SN can trigger the MN to generate the QoE measurement configuration for the UE; or a target service type corresponding to a QoE measurement result that can be received by the SN.

305: The terminal device sends the QoE measurement result corresponding to the secondary access network device.

Optionally, this embodiment of this application may be combined with the embodiments corresponding to FIG. 2A or FIG. 2B. To be specific, when sending the QoE measurement result corresponding to the secondary access network device, the terminal device sends the QoE measurement result by using a first radio bearer or a first logical channel configured by the master access network device. For specific descriptions, reference may be made to the descriptions of entity examples corresponding to FIG. 2A or FIG. 2B. Optionally, after obtaining the QoE measurement result corresponding to the SN, the UE sends the QoE measurement result to the MN, where the QoE measurement result sent by the UE may carry a service type corresponding to the QoE measurement result. Because the MN and the SN have negotiated a service type of the QoE measurement result separately corresponding to the MN and the SN, the MN can know, based on the service type, the measurement result corresponding to QoE measurement configured by which node. Correspondingly, after receiving the measurement result, the MN knows, based on the service type, whether the measurement result is the QoE measurement result corresponding to the MN or the QoE measurement result corresponding to the SN. The MN may forward, to the SN or another entity, the QoE measurement result corresponding to the SN. This improves efficiency of sending the QoE measurement result.

Optionally, this embodiment of this application may be combined with the embodiment corresponding to FIG. 3. Before configuring the QoE measurement configuration, the SN negotiates with the MN that the MN determines the target service type for which the SN can perform QoE measurement configuration. When sending the QoE measurement result corresponding to the secondary access network device, the terminal sends the QoE measurement result by using the first radio bearer or the first logical channel configured by the secondary access network device. Similarly, the QoE measurement result sent by the UE may carry a service type corresponding to the QoE measurement result. Accordingly, the SN may determine, based on the service type corresponding to the received QoE measurement result, whether the QoE measurement result is the QoE measurement result corresponding to the SN. This improves accuracy of receiving the QoE measurement result.

Optionally, this embodiment of this application may alternatively be a separate embodiment. To be specific, in other dual-connectivity or multi-connectivity scenarios, the target service type of the QoE measurement result corresponding to the SN is also determined by the MN. For example, a radio bearer used by the UE to transmit the QoE measurement result corresponding to the SN is an existing radio bearer and logical channel between the SN and the UE. In this case, the SN may also determine, based on the service type corresponding to the received QoE measurement result, whether the received QoE measurement result is the QoE measurement result corresponding to the SN. This improves accuracy of receiving the QoE measurement result.

It should be noted that in the communication methods in the foregoing embodiments, steps or operations implemented by the terminal device may alternatively be implemented by a component that can be configured in the terminal device; and steps or operations implemented by an access network device (for example, the MN or the SN) may alternatively be implemented by a component that can be configured in the access network device.

FIG. 5 shows a communication apparatus 400 according to an embodiment of this application. The communication apparatus 400 may be configured to perform the communication method of the communication apparatus and corresponding operations or steps corresponding to the terminal device in the specific embodiments in FIG. 2A, FIG. 2B or FIG. 3. The communication apparatus may be the terminal device or a component (for example, a chip or a circuit) configured in the terminal device. In a possible implementation, as shown in FIG. 5, the communication apparatus 400 includes a sending module 401 and a processing module 402.

The processing module 402 is configured to obtain a corresponding QoE measurement result based on quality of experience QoE measurement configuration, where the QoE measurement result includes a QoE measurement result corresponding to a secondary access network device.

The sending module 401 is configured to send the QoE measurement result by using a first radio bearer, where the first radio bearer is a radio bearer configured by a master access network device or the secondary access network device for the terminal device.

Optionally, the terminal device further includes a receiving module 403, configured to:
receive, from the master access network device, a QoE measurement configuration configured by the secondary access network device for the terminal device; or
receive, from the secondary access network device, a QoE measurement configuration configured by the secondary access network device for the terminal device.

Optionally, the receiving module 403 is further configured to:
when the first radio bearer is the radio bearer configured by the master access network device for the terminal device, receive indication information from the master access network device; or when the first radio bearer is the radio bearer configured by the secondary access network device for the terminal device, receive indication information from the secondary access network device, where
the indication information indicates that the first radio bearer or a first logical channel of the first radio bearer is used to send the QoE measurement result.

Optionally, the receiving module 403 and the sending module 401 may be an interface circuit or a transceiver. The receiving module 403 and the sending module 401 may be independent modules, or may be integrated into a transceiver module (not shown in the figure). The transceiver module may implement functions of the receiving module 403 and the sending module 401.

The processing module 402 may be a processor, a chip, an encoder, an encoding circuit, or another integrated circuit that can implement the method in this application.

Because the specific method and embodiment have been described above, the communication apparatus 400 is configured to perform a communication method corresponding to the terminal device. For details, refer to descriptions of related parts in the corresponding embodiment. Details are not described herein again.

Optionally, the communication apparatus 400 may further include a storage module (not shown in the figure). The storage module may be configured to store data and/or signaling. The storage module may be coupled to the processing module 402, or may be coupled to the receiving module 403 or the sending module 401. For example, the processing module 402 may be configured to read the data and/or the signaling in the storage module, so that the communication method in the foregoing method embodiments is performed. The storage module may be a memory.

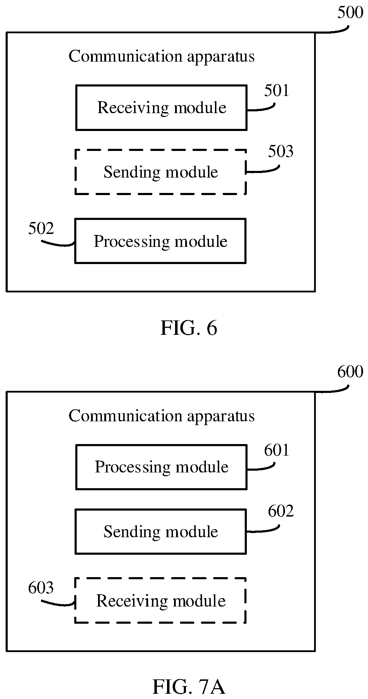

FIG. 6 shows a communication apparatus 500 according to an embodiment of this application. The communication apparatus 500 may be configured to perform the communication method of the communication apparatus and corresponding operations or steps corresponding to the master access network device in the specific embodiment in FIG. 2A or FIG. 2B. The communication apparatus may be the master access network device or a component (for example, a chip or a circuit) configured in the master access network device. In a possible implementation, as shown in FIG. 6, the communication apparatus 500 includes a receiving module 501 and a processing module 502.

The processing module 502 is adapted to configure a first radio bearer for receiving a quality of experience QoE measurement result, where the QoE measurement result includes a QoE measurement result corresponding to a secondary access network device.

The receiving module 501 is configured to receive, by using the first radio bearer, the QoE measurement result sent by a terminal device.

Optionally, the first radio bearer includes a plurality of logical channels; and the receiving module 501 is specifically configured to receive, through a first logical channel of the plurality of logical channels of the first radio bearer, the QoE measurement result sent by the UE.

Optionally, the receiving module 501 is further configured to receive, from the secondary access network device, a QoE measurement configuration configured by the secondary access network device for the terminal device.

The communication apparatus 500 further includes a sending module 503, configured to:
send, to the terminal device, the QoE measurement configuration configured by the secondary access network device for the terminal device.

Optionally, the sending module 503 is further configured to send indication information to the terminal device, where the indication information indicates the first radio bearer or the first logical channel of the first radio bearer for sending the QoE measurement result.

Alternatively, the communication apparatus 500 provided in FIG. 6 may be configured to perform the communication method of the communication apparatus and corresponding operations or steps corresponding to the secondary access network device in the specific embodiment in FIG. 3. The communication apparatus may be the secondary access network device or a component (for example, a chip or a circuit) configured in the secondary access network device. In a possible implementation,
the processing module 502 is adapted to configure a first radio bearer for receiving a quality of experience QoE measurement result, where the QoE measurement result includes a QoE measurement result corresponding to a secondary access network device; and
the receiving module 501 is configured to receive, by using the first radio bearer, the QoE measurement result sent by a terminal device.

Optionally, the first radio bearer includes a plurality of logical channels; and the receiving module 501 is specifically configured to receive, through a first logical channel of the plurality of logical channels of the first radio bearer, the QoE measurement result sent by the terminal device.

Optionally, the sending module 503 is configured to:
send, to the terminal device, the QoE measurement configuration configured by the secondary access network device for the terminal device; or
send, to the master access network device, the QoE measurement configuration configured by the secondary access network device for the terminal device.

Optionally, the sending module 503 is further configured to send indication information to the terminal device, where the indication information indicates the first radio bearer or the first logical channel of the first radio bearer for sending the QoE measurement result.

Optionally, the receiving module 501 and the sending module 503 may be an interface circuit or a transceiver. The receiving module 501 and the sending module 503 may be independent modules, or may be integrated into a transceiver module (not shown in the figure). The transceiver module may implement functions of the receiving module 501 and the sending module 503.

Optionally, the processing module 503 may be a processor, a chip, an encoder, an encoding circuit, or another integrated circuit that can implement the method in this application.

Because the specific method and embodiment have been described above, the communication apparatus 500 is configured to perform a communication method corresponding to an access network device. For details, refer to descriptions of related parts in the corresponding embodiment. Details are not described herein again.

Optionally, the communication apparatus 500 may further include a storage module (not shown in the figure). The storage module may be configured to store data and/or signaling. The storage module may be coupled to the processing module 502, or may be coupled to the receiving module 501, the sending module 503, or the sending module 503. For example, the processing module 502 may be configured to read the data and/or the signaling in the storage module, so that the communication method in the foregoing method embodiments is performed.

FIG. 7A shows a communication apparatus 600 according to an embodiment of this application. The communication apparatus 600 may be configured to perform the communication method of the communication apparatus and corresponding operations or steps corresponding to the master access network device in the specific embodiment in FIG. 4. The communication apparatus may be the master access network device or a component (for example, a chip or a circuit) configured in the master access network device. In a possible implementation, as shown in FIG. 7A, the communication apparatus 600 includes:
a processing module 601, configured to generate third information, where the third information indicates a target service type of QoE measurement that can be configured or triggered corresponding to a secondary access network device; and
a sending module 602, configured to send the third information to the secondary access network device.

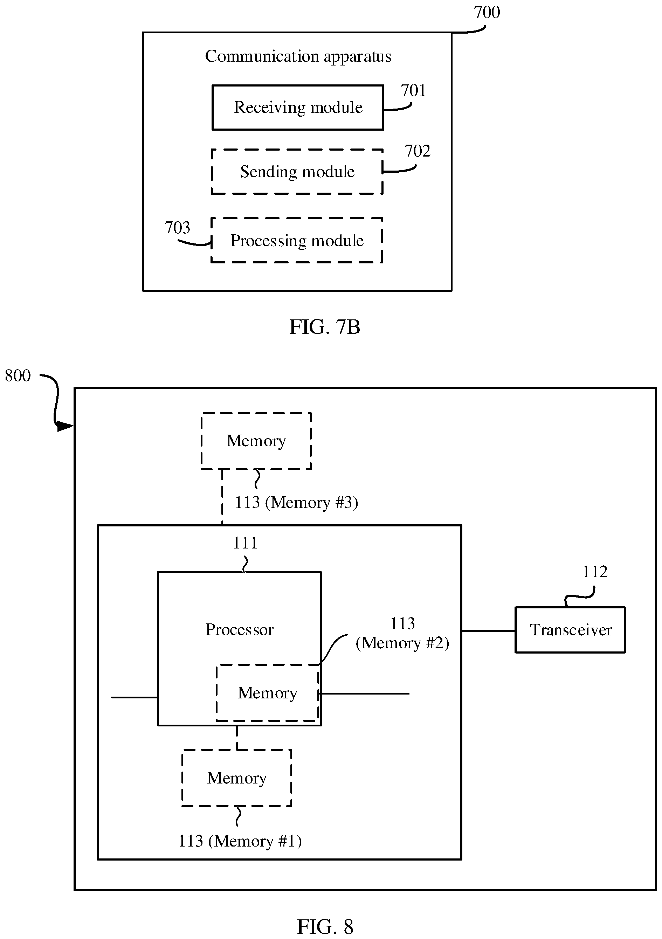

FIG. 7B shows a communication apparatus 700 according to an embodiment of this application. The communication apparatus 700 may be configured to perform the communication method of the communication apparatus and corresponding operations or steps corresponding to the secondary access network device in the specific embodiment in FIG. 4. The communication apparatus may be the secondary access network device or a component (for example, a chip or a circuit) configured in the secondary access network device. In a possible implementation, as shown in FIG. 7B, the communication apparatus 700 includes:
a receiving module 701, configured to receive third information, where the third information indicates a target service type of QoE measurement that can be configured or triggered corresponding to the secondary access network device.

Optionally, the communication apparatus 600 may further include a receiving module 603, or the communication apparatus 700 may further include a sending module 702. The receiving module and the sending module (including the receiving module 603 and the sending module 602, or the receiving module 701 and the sending module 702) may be an interface circuit or a transceiver. The receiving module and the sending module may be independent modules, or may be integrated into a transceiver module (not shown in the figure). The transceiver module may implement functions of the receiving module and the sending module.

Optionally, the communication apparatus 700 may further include a processing module 703. The processing module (including the processing module 601 or the processing module 703) may be a processor, a chip, an encoder, an encoding circuit, or another integrated circuit that can implement the method in this application.

Because the specific method and embodiment have been described above, the communication apparatus 600 is configured to perform a communication method corresponding to a terminal device. For details, refer to descriptions of related parts in the corresponding embodiment. Details are not described herein again.

Optionally, the communication apparatus 600 or the communication apparatus 700 may further include a storage module (not shown in the figure). The storage module may be configured to store data and/or signaling. The storage module may be coupled to the processing module, or may be coupled to the receiving module or a sending module 401. For example, the processing module may be configured to read the data and/or the signaling in the storage module, so that the communication method in the foregoing method embodiments is performed. The storage module may be a memory.

FIG. 8 shows a schematic diagram of a structure of a communication apparatus according to an embodiment of this application. For a structure of a terminal device or an access network device, refer to the structure shown in FIG. 8. A communication apparatus 800 includes a processor 111 and a transceiver 112, where the processor 111 and the transceiver 112 are electrically coupled.

The processor 111 is configured to execute some or all computer program instructions. When the some or all computer program instructions are executed, the apparatus is enabled to perform the method in any one of the foregoing embodiments.

The transceiver 112 is configured to communicate with another device, for example, send or receive a QoE measurement result corresponding to a secondary access network device.

Optionally, the communication apparatus 800 further includes a memory 113, configured to store the computer program instructions. Optionally, the memory 113 (Memory #1) is disposed in the apparatus, the memory 113 (Memory #2) is integrated with the processor 111, or the memory 113 (Memory #3) is disposed outside the apparatus.

It should be understood that the communication apparatus 800 shown in FIG. 8 may be a chip or a circuit. For example, the communication apparatus 800 may be a chip or a circuit that may be disposed in a terminal apparatus or a communication apparatus. Alternatively, the transceiver 112 may be a communication interface. The transceiver includes a receiver and a transmitter. Further, the communication apparatus 800 may include a bus system.

The processor 111, the memory 113, and the transceiver 112 are connected through the bus system. The processor 111 is configured to execute the instructions stored in the memory 113, to control the transceiver to receive a signal and send a signal, to complete the steps performed by a first device or a second device in the implementation method in this application. The memory 113 may be integrated into the processor 111, or may be disposed separately from the processor 111.

In an implementation, it may be considered that functions of the transceiver 112 are implemented through a transceiver circuit or a dedicated transceiver chip. It may be considered that the processor 111 may be implemented through a dedicated processing chip, a processing circuit, a processor, or a general-purpose chip. The processor may be a central processing unit (central processing unit, CPU), a network processor (network processor, NP), or a combination of the CPU and the NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory described in this application is intended to include but is not limited to these memories and any memory of another proper type.

An embodiment of this application provides a computer storage medium. The computer storage medium stores a computer program, and the computer program includes instructions for performing the method corresponding to the access network device in the foregoing embodiments.

An embodiment of this application provides a computer storage medium. The computer storage medium stores a computer program, and the computer program includes instructions for performing the method corresponding to the terminal device in the foregoing embodiments.

An embodiment of this application provides a computer program product including instructions. When the computer program product runs on a computer, the computer is enabled to perform the method corresponding to the access network device in the foregoing embodiments.

An embodiment of this application provides a computer program product including instructions. When the computer program product runs on a computer, the computer is enabled to perform the method corresponding to the terminal device in the foregoing embodiments.

An embodiment of this application provides a communication system. The communication system includes a terminal device and a master access network device. Optionally, the communication system may alternatively include a secondary access network device. The secondary access network device includes the communication apparatus corresponding to FIG. 6. The communication apparatus is configured to perform the communication method of the communication apparatus and corresponding operations or steps corresponding to the secondary access network device in the specific embodiment in FIG. 3.

An embodiment of this application further provides a communication system. The communication system includes a terminal device and a secondary access network device. Optionally, the communication system may alternatively include a master access network device. The master access network device includes the communication apparatus corresponding to FIG. 6. The communication apparatus is configured to perform the communication method of the communication apparatus and corresponding operations or steps corresponding to the master access network device in the specific embodiment in FIG. 2A or FIG. 2B.

An embodiment of this application further provides a communication system. The communication system includes a master access network device and a secondary access network device. Optionally, the communication system may alternatively include a terminal device. The terminal device includes the communication apparatus corresponding to FIG. 5. The communication apparatus is configured to perform the communication method of the communication apparatus and corresponding operations or steps corresponding to the terminal device in the specific embodiments in FIG. 2A, FIG. 2B or FIG. 3.

An embodiment of this application further provides a communication system, including a terminal device, a master access network device, and a secondary access network device. Optionally, the master access network device includes the communication apparatus corresponding to FIG. 7A, and the secondary access network device includes the communication apparatus corresponding to FIG. 7B. The communication apparatus corresponding to FIG. 7A is configured to perform the communication method of the communication apparatus and corresponding operations or steps corresponding to the master access network device in the specific embodiment in FIG. 4. The communication apparatus corresponding to FIG. 7B is configured to perform the communication method of the communication apparatus and corresponding operations or steps corresponding to the secondary access network device in the specific embodiment in FIG. 4.

It should be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and implementation constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units. Some or all of the units may be selected depending on actual requirements to achieve the objectives of the solutions of the embodiments.

In addition, function units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, technical solutions of this application essentially, or the part contributing to the current technology, or some of the technical solutions may be implemented in a form of a software product. The computer software product is stored in a storage medium, and includes a plurality of instructions for instructing a computer device (which may be a personal computer, a server, or an access network device) to perform all or some of the steps of the methods described in embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining a corresponding quality of experience QoE measurement result based on a QoE measurement configuration, wherein the QoE measurement result comprises a QoE measurement result corresponding to a secondary access network device; and
sending the QoE measurement result by using a first radio bearer, wherein the first radio bearer is a radio bearer configured by a master access network device or the secondary access network device for a terminal device.

2. The method according to claim 1, wherein that the first radio bearer is a radio bearer configured by the master access network device for the terminal device comprises:
the first radio bearer is the radio bearer configured by the master access network device for sending the QoE measurement result.

3. The method according to claim 1 or 2, wherein the first radio bearer comprises a plurality of logical channels; and
the sending the QoE measurement result by using a first radio bearer comprises:
sending the QoE measurement result through a first logical channel in the plurality of logical channels of the first radio bearer, wherein the first logical channel is a logical channel corresponding to sending of the QoE measurement result.

4. The method according to any one of claims 1 to 3, wherein the QoE measurement result corresponding to the secondary access network device comprises a measurement result corresponding to a QoE measurement configuration configured by the secondary access network device for the terminal device; or
a measurement result corresponding to a QoE measurement configuration configured by the master access network device that is triggered by the secondary access network device.

5. The method according to claim 4, wherein the method further comprises:
receiving, from the master access network device, the QoE measurement configuration configured by the secondary access network device for the terminal device; or
receiving, from the secondary access network device, the QoE measurement configuration configured by the secondary access network device for the terminal device.

6. The method according to any one of claims 1 to 5, wherein before the sending the QoE measurement result by using a first radio bearer, the method further comprises:
when the first radio bearer is the radio bearer configured by the master access network device for the terminal device, receiving indication information from the master access network device; or when the first radio bearer is the radio bearer configured by the secondary access network device for the terminal device, receiving indication information from the secondary access network device, wherein
the indication information indicates the first radio bearer or the first logical channel of the first radio bearer for sending the QoE measurement result.

7. The method according to any one of claims 1 to 6, wherein the QoE measurement result corresponding to the secondary access network device is a measurement result corresponding to a target service type, and the target service type is determined by the master access network device.

8. A communication method, wherein the method comprises:
configuring, by an access network device, a first radio bearer for receiving a quality of experience QoE measurement result, wherein the access network device comprises a master access network device or a secondary access network device, and the QoE measurement result comprises a QoE measurement result corresponding to the secondary access network device; and
receiving, by the access network device, the QoE measurement result from a terminal device by using the first radio bearer.

9. The method according to claim 8, wherein the first radio bearer comprises a plurality of logical channels; and
the receiving the QoE measurement result sent by a terminal device by using the first radio bearer comprises:
receiving, through a first logical channel of the plurality of logical channels of the first radio bearer, the QoE measurement result sent by the terminal device.

10. The method according to claim 8 or 9, wherein the QoE measurement result corresponding to the secondary access network device comprises a measurement result corresponding to a QoE measurement configuration configured by the secondary access network device for the terminal device; or
a measurement result corresponding to a QoE measurement configuration configured by the master access network device that is triggered by the secondary access network device.

11. The method according to any one of claims 8 to 10, wherein the access network device is the master access network device, and the method further comprises:
receiving, by the master access network device from the secondary access network device, the QoE measurement configuration configured by the secondary access network device for the terminal device; and
sending, by the master access network device to the terminal device, the QoE measurement configuration configured by the secondary access network device for the terminal device.

12. The method according to any one of claims 8 to 10, wherein the access network device is the secondary access network device, and the method further comprises:
sending, by the secondary access network device to the terminal device, the QoE measurement configuration configured by the secondary access network device for the terminal device; or
sending, by the secondary access network device to the master access network device, the QoE measurement configuration configured by the secondary access network device for the UE.

13. The method according to any one of claims 8 to 12, wherein before the receiving, by the access network device, the QoE measurement result by using the first radio bearer, the method further comprises:
sending, by the access network device, indication information to the terminal device, wherein the indication information indicates the first radio bearer or the first logical channel of the first radio bearer for sending the QoE measurement result.

14. The method according to any one of claims 8 to 13, wherein the QoE measurement result corresponding to the secondary access network device is a measurement result corresponding to a target service type, and the target service type is determined by the master access network device.

15. A communication apparatus, comprising at least one module configured to implement the communication method according to any one of claims 1 to 7.

16. A communication apparatus, used in a master access network device, and comprising at least one module configured to implement the communication method according to any one of claims 8 to 11 and claim 13 or 14.

17. A communication apparatus, used in a secondary access network device, and comprising at least one module configured to implement the communication method according to any one of claims 8 to 10 and claims 12 to 14.

18. A readable storage medium, configured to store instructions, wherein when the instructions are executed, the method according to any one of claims 1 to 7 is implemented, or the method according to any one of claims 8 to 14 is implemented.

19. A communication system, wherein the system comprises a terminal device and an access network device, the terminal device comprises the communication apparatus according to claim 15, the access network device comprises the communication apparatus according to claim 16, or the access network device comprises the communication apparatus according to claim 17.

20. A computer program product, wherein when a computer reads and executes the computer program product, the computer is enabled to perform the method according to any one of claims 1 to 7 or claims 8 to 14.
